# EUROPEAN PATENT SPECIFICATION

(11) **EP 4 575 397 B1**
(45) Date of publication and mention of the grant of the patent: **04.02.2026**
(21) Application number: 23218720.3
(22) Date of filing: 20.12.2023
(51) Int. Cl.: G01C 21/00

(54) **METHOD OF MODIFYING MAP DATA, AND MACHINE-READABLE INSTRUCTION CODE**
VERFAHREN ZUR MODIFIZIERUNG VON KARTENDATEN UND MASCHINENLESBARER BEFEHLSCODE
PROCÉDÉ DE MODIFICATION DE DONNÉES CARTOGRAPHIQUES ET CODE D'INSTRUCTION LISIBLE PAR MACHINE

(43) Date of publication of application: 25.06.2025
(73) Proprietor: TomTom Global Content B.V., 1011 AC Amsterdam (NL)
(72) Inventor: Plichta, Dominik Michal, 1011 AC Amsterdam (NL); Debicka, Aleksandra Anna, 1011 AC Amsterdam (NL); Kmiecik, Marcin Michal, 1011 AC Amsterdam (NL); Jarmolowicz, Jaroslaw Marek, 1011 AC Amsterdam (NL)
(74) Representative: Meier, Florian

(56) References cited:
- EP-A1- 3 832 422
- WO-A1-2023/154199

## Description

### TECHNICAL FIELD

Embodiments of the invention relate to techniques associated with electronic map data, such as map data for use in navigation, driver assistance, advanced driver assistance, and/or automated driving. Embodiments of the invention relate in particular to techniques useful in providing output that is based at least on several map layers.

### BACKGROUND

Map data is a valuable resource for enhancing vehicle navigation functions, driver assistance systems, and enabling autonomous driving. It provides information about the roads, routes, and surroundings that empower these and other technologies to operate efficiently and safely. One of the advantages of electronic map data is that it can be updated in an ongoing basis (i.e., continually), to reflect changes such as road changes, construction sites, and/or traffic patterns. This ensures that navigation systems can provide drivers with the relevant guidance, reducing the likelihood of getting lost or encountering unexpected obstacles. Vehicle navigation functions, driver assistance systems, and autonomous driving systems also use electronic map data to enhance safety and improve driving comfort. Features like lane departure warnings, blind-spot detection, and adaptive cruise control can utilize the information provided by electronic maps to make informed decisions and provide timely alerts or interventions. For example, if the map data indicates a sharp curve ahead, the system can adjust the vehicle's speed or warn the driver to ensure safe maneuvering. Additionally, electronic map data can assist in identifying speed limits, traffic signs, and other road conditions, allowing driver assistance systems to act accordingly. Thus, electronic map data helps vehicles to execute appropriate actions, enhancing safety and overall efficiency.

WO 2023/154199 A1 discloses a network of servers, such as a content delivery network, that provides a lightweight approach to hosting and serving High definition (HD) map data to vehicles. The technique may allow for modifying various map components, such as tiles, layers, and/or segments. A request to modify a first version of a HD map may be received. Map data may be recorded that represents a second version of the HD map. A second request associated with the HD map may be received from a vehicle. Based on this second request, second map data representative of at least a portion of a layer may be identified and transmitted.

EP 3 832 422 A1 discloses a method and system for providing map data based on information obtained from a vehicle.

There is a need in the art for techniques that provide enhanced flexibility in techniques of modifying map data.

### SUMMARY

It is an object of embodiments of the invention to provide methods, systems, and/or machine-readable instruction code that provide enhanced flexibility in modifying map data. It is in particular an object to provide techniques of modifying map data which do not require modifications in different map layers to be synchronized with each other, while being operative to mitigate the risk of an inconsistency in map data provided for use by a map data consumer (such as a vehicle or a map distribution system).

According to the invention, a method and machine-readable instruction code as recited in the independent claims are provided. The dependent claims define preferred and advantageous embodiments.

According to an aspect of the invention, a method of modifying map data is provided. The method comprises obtaining, by a processing system, several streams. Each of the several streams comprises data indicative of modifications of one of several map layers with which the stream is associated. The several map layers comprise a child layer and one or several parent layers. The several map layers comprise map object definitions, wherein the map object definitions comprise parent layer map object definitions in the one or several parent layers and child layer map object definitions in the child layer. The child layer map object definitions include references to parent layer map objects defined by the parent layer map object definitions. The method comprises performing, by the processing system, a stream processing of the several streams. The stream processing comprises an integrity verification to verify integrity of the child layer map object definitions modified as indicated by a stream of the several streams that is associated with the child layer and of the parent layer map object definitions modified as indicated by at least another one of the several streams that is associated with the one or several parent layers. The stream processing comprises generating output based at least on a result of the integrity verification.

A stream refers to a flow of data, with the processing system being operative to process messages of the stream one after another. The relative timing between messages in the stream can be variable. Unlike in batch processing, where data is processed in large chunks or batches, the processing system is operative to process streams, thus being operative to handle messages as they arrive. The temporal aspect of streams means that the processing system is operative to process messages of the various streams even though the messages may arrive at irregular intervals and/or with different delays between them.

Various effects and advantages are associated with the method. Information on modifications of any one of the several map layers is obtained as a stream. Thus, it is not required that modifications made to different map layers, of which the streams associated with the map layers are indicative, are performed in accordance with a previously agreed upon timing (e.g., synchronously). The stream processing that includes an integrity verification is operative to detect any inconsistencies that may be caused by modifications of different map layers that are performed in an asynchronous manner. The stream processing can thereby ensure that the output is not based on inconsistencies that can potentially be caused by modifications of different map layers, or at least not on inconsistencies that are not tolerable for, e.g., safety reasons.

Thus, by using a stream processing that includes the integrity verification, significantly enhanced versatility in modifying map layers is attained. The map layers can be modified in a manner that does not require temporal alignment of the modifications of the various map layers. The risk of the output (such as map data for use by a map data consumer) being corrupted due to inconsistencies is mitigated. Thereby, a more versatile technique of modifying map data in various map layers is provided, while mitigating the risk of inconsistencies between different map layers affecting the map data provided to, e.g., map data consumers (such as systems for route planning and/or route search, navigation, driver assistance, advanced driver assistance, and/or autonomous driving).

The stream processing may comprise a binding. The binding may comprise combining information from several streams, processing messages of the several streams as they arrive and/or determining whether messages from different streams include information relating to a same map object that can be combined into an output stream message of an output stream of the binding.

Thereby, information from different ones of the several streams may be combined in a stream processing, in which incoming messages are processed as they are received.

The binding may comprise generating output that comprises an output stream.

Thereby, the output stream is generated from the several streams.

The stream of the several streams that is associated with the child layer may comprise a first sequence of messages. The at least another one of the several streams that is associated with the one or several parent layers may comprise a second sequence of messages. A message timing of the first sequence of messages may be independent of a message timing of the second sequence of messages.

Thereby, information on modifications in any one of the several map layers may be received with a timing that depends on when the modifications in the respective map layer are performed, without requiring temporal alignment with the modifications in the parent layer(s) that is reflected by the second sequence of messages. This is beneficial for freshness of the output (e.g., map data provided to a map data consumer).

The stream processing may comprise processing the messages of the first sequence of messages one by one as they are received by the processing system. The stream processing may comprise processing the messages of the second sequence of messages one by one as they are received by the processing system.

Thereby, the processing system is operative to generate output (such as map data) by processing messages of the first sequence of messages and of the second sequence of messages as they arrive. This is beneficial for freshness of the output (e.g., map data provided to a map data consumer). It is not required for the processing system to await receipt of all messages of the first sequence of messages and of the second sequence of messages before it starts the processing (such as the integrity verification).

The first stream of messages may comprise a first message that provides information on a child layer modification of the child layer triggered by a parent layer modification of a parent layer of the one or several parent layers, wherein a second message of the second sequence of messages provides information on the parent layer modification, wherein the processing system receives the first message at a different time than the second message (e.g., with a delay that exceeds a processing time for making the child layer modification responsive to the parent layer modification).

Thereby, greater flexibility is attained in the timing at which the several map layers can be modified.

The stream processing may comprise generating an output message responsive to confirming that the first message and the second message pass the integrity verification.

Thereby, messages that provide information on modifications that are consistent with each other may be used to generate an output message without having to wait for any outstanding messages of the first sequence of messages and of the second sequence of messages. This is beneficial for freshness of the output (e.g., freshness of the map data) and/or for allowing sources of the several streams to operate independently. There is no need to maintain synchronization between the sources of the several streams. This increases scalability.

The stream processing may comprise triggering a corrective action responsive to detection of an inconsistency in the integrity verification.

Thereby, the risk is mitigated of output being based on at least one message in the first and/or second sequence of messages causing an inconsistency. The quality of the output (e.g., of map data) is improved thereby.

The stream processing may comprise storing, responsive to detection of the inconsistency, a data item that provides information on at least one child layer map object definition that is not consistent with the parent layer map object definitions.

Thereby, the data item remains available to the stream processing for resolving the inconsistency, e.g., by waiting for at least one subsequent message in at least one of the several streams that resolved the inconsistency.

The data item may be stored at least temporarily after detection of the inconsistency.

Thereby, the data item remains available to the stream processing for resolving the inconsistency, e.g., by waiting for at least one subsequent message in at least one of the several streams that resolved the inconsistency.

The data item may be stored temporarily after detection of the inconsistency, and the method may comprise deleting, by the processing system, the data item in response to a deletion criterion (such as a time-based deletion criterion).

Thereby, the data item remains available to the stream processing for an inconsistency resolution in a time period after detection of the inconsistency, while freeing storage space for storing other data items in an ongoing manner (i.e., continually) as new inconsistencies are detected.

The data item may be or may be indicative of payload data in a message which is determined to give rise to the inconsistency.

Thereby, this information remains available to the stream processing for an inconsistency resolution in a time period after detection of the inconsistency.

The stream processing may comprise temporarily preventing, responsive to the inconsistency, the generation of an output message that is based on the message determined to give rise to the inconsistency.

Thereby, the risk of potentially incorrect output (such as map data) being provided is mitigated.

The stream processing may comprise monitoring, responsive to detection of the inconsistency, the several streams prior to triggering the corrective action.

Thereby, the several streams can be monitored to determine whether the inconsistency is remedied by another modification of another layer. The asynchronous nature of the messages in the several streams and/or the asynchronous nature of the modifications in the various map layers is thereby taken into account.

Monitoring the several streams may comprise ascertaining, based on the data item, that the inconsistency remains unaddressed by the modifications indicated by the several streams in a monitoring time interval after detecting the inconsistency.

Thereby, the several streams are monitored to determine whether the inconsistency is remedied by another modification of another layer. Quality of the output (e.g., of the map data) is enhanced thereby.

The stream processing may comprise generating an output message based at least one the data item responsive to ascertaining that the inconsistency is addressed by the modifications indicated by the several streams in a monitoring time interval after detecting the inconsistency.

Thereby, ascertaining that the inconsistency is resolved triggers the generation of an output message (such as an output message including map data based on at least two different layers of the several layers). This is beneficial for both accuracy and freshness of the output (e.g., map data).

The corrective action may comprise correcting an incorrect reference to at least one of the parent layer map objects in at least one of the child layer map object definitions based at least on the inconsistency.

Thereby, the stream processing is operative to trigger correction of referential integrity issues. This enhanced accuracy of the generated output (e.g., map data).

Alternatively or additionally, the corrective action may comprise propagating feedback to map layer provision systems of the several map layers based at least on the inconsistency.

Thereby, the stream processing is operative to trigger provision of feedback to allow the map layer provision systems to address the at least one inconsistency. This enhances accuracy of the generated output (e.g., map data).

The feedback may be propagated selectively to one or several map layer provision systems from which at least one message was received in the several streams, which at least one message gives rise to the inconsistency.

Thereby, the stream processing is operative to trigger provision of feedback to allow the map layer provision systems to address the at least one inconsistency. This enhances accuracy of the generated output (e.g., map data).

Alternatively or additionally, the corrective action may comprise changing a type of at least one of the modifications from a first type of modification to a second type of modification, wherein the at least one of the modifications is a root cause of the inconsistency, wherein changing the type resolves the inconsistency.

Thereby, the stream processing is operative to trigger correction of an incorrect modification. This enhances accuracy of the generated output (e.g., map data).

The first type of modification and the second type of modification may each be selected from a group comprising an addition of an object definition, a deletion of an object definition, a change in an object definition.

Thereby, incorrect operations performed on a map layer may be corrected. This enhances accuracy of the generated output (e.g., map data).

The first type of modification and the second type of modification may each be selected from a group consisting of an addition of an object definition, a deletion of an object definition, a change in an object definition.

Thereby, incorrect operations performed on a map layer may be corrected. This enhances accuracy of the generated output (e.g., map data).

Alternatively or additionally, the corrective action may comprise discarding a duplicate of a map object creation, a duplicate of a map object deletion, and/or a modification of a non-existing map object.

Thereby, certain types of incorrect operations performed on a map layer may be handled in a manner which reduces the risk of them adversely impacting the output (e.g., map data).

Generating the output may comprise aggregating at least two modifications of map object definitions relating to a same map object into an aggregate modification. The output may be based at least on the aggregate modification, wherein the aggregating is performed based at least on a result of the integrity verification.

Thereby, output (such as map data for use by a map data consumer) may be generated that combines information from several map layers. The stream processing that comprises an integrity verification provides benefits both with regard to freshness and quality (e.g., accuracy) of the output.

The integrity verification may comprise a referential integrity verification that checks that modifications of the child layer map object definitions as indicated by the stream of the several streams that is associated with the child layer are referentially consistent with the parent layer map object definitions modified as indicated by the at least another one of the several streams that is associated with the one or several parent layers.

Thereby, the stream processing is operative to mitigate the risk that referential integrity issues adversely affect the quality of the output (e.g., map data).

Alternatively or additionally, the integrity verification may comprise a logical integrity verification of at least one child layer map object definition modified as indicated by the stream of the several streams that is associated with the child layer and/or at least one parent layer map object definition modified as indicated by the at least another one of the several streams that is associated with the one or several parent layers.

Thereby, the stream processing is operative to mitigate the risk that logical integrity issues adversely affect the quality of the output (e.g., map data). The logical integrity issues may comprise integrity issues that exist within a layer and are not dependent on references between layers.

Alternatively or additionally, the integrity verification may comprise a syntactical integrity verification of the child layer map object definitions and the parent layer map object definitions, respectively modified as indicated by the several streams, to verify conformity with a set of syntactical rules, logical rules, and/or other rules that do not necessarily depend on referential integrity between different map layers.

Thereby, the stream processing is operative to mitigate the risk that syntactical integrity issues adversely affect the quality of the output (e.g., map data).

The several map layers may define an acyclic graph.

Thereby, flexibility is attained in the references between map layers that are supported.

The several map layers may comprise a base map layer defining nodes and links of a navigable network.

Thereby, the basic geometry of a network of navigable links are defined and can be referenced by other map layers.

The base map layer may define coordinates (such as latitude and longitude, without being limited thereto) of the nodes.

Thereby, the positions of nodes of a network of navigable links are defined and can be referenced by other map layers.

The base map layer may define ways (such as navigable links) which include one or several of the nodes.

Thereby, the navigable links are defined and can be referenced by other map layers.

The one or several parent layers may comprise the base map layer.

Thereby, the stream processing is operative to perform an integrity verification that takes into account modifications of the base map layer.

The integrity verification may comprise a referential integrity verification to detect an inconsistency that is a referential inconsistency between the base map layer and the child layer.

Thereby, the stream processing is operative to detect referential inconsistency issues that may exist due to modifications made to the base map layer and/or any of its child layers (possibly including child layers of higher generation, that themselves reference object definitions in at least one map layer different from the base map layer). A child layer of "higher generation", as used herein, is a child layer that has, as at least one of its parent layers, a parent layer that is different from the base map layer and which may be directly or, again indirectly, in a parent-child-relationship with the base map layer.

Alternatively or additionally, the one or several parent layers may comprise a map layer that references nodes and links defined by the base map layer but is different from the base map layer.

Thereby, the stream processing is operative to perform an integrity verification that takes into account modifications in one or several parent layers different from the base map layer.

The integrity verification may comprise a referential integrity verification to detect an inconsistency that is a referential inconsistency between the child layer and the map layer that references nodes and links defined by the base map layer but is different from the base map layer.

Thereby, the stream processing is operative to detect referential inconsistency issues that may exist due to modifications to the map layer that references nodes and links defined by the base map layer but is different from the base map layer and/or any of its child layers.

The acyclic graph may define a hierarchical map layer structure that comprises the base map layer at a root.

Thereby, dependencies between map layers can be organized in a hierarchical manner, which may facilitate prioritization of modifications.

The acyclic graph may comprise one or several map layers referencing the base map layer and comprising one, several, or all of: a turn restrictions layer; a speed limits layer; a speed profile layer; a one way layer; a blocked passages layer; a buildings layer; an address points layer; a points of interest layer; a parking information layer; a point of interest layer.

Thereby, information useful for performing various tasks associated with route search, navigation, driver assistance, advanced driver assistance, and/or autonomous driving can be harnessed to generate the output.

The acyclic graph may comprise one or several map layers referencing the base map layer and being selected from a group consisting of: a turn restrictions layer; a speed limits layer; a speed profile layer; a one way layer; a blocked passages layer; a buildings layer; an address points layer; a points of interest layer; a parking information layer; a point of interest layer.

Thereby, information useful for performing various tasks associated with route search, navigation, driver assistance, advanced driver assistance, and/or autonomous driving can be harnessed to generate the output.

The output may comprise an output stream. The output stream may comprise a sequence of output messages.

Thereby, the stream processing is operative to provide the output stream. This is beneficial for freshness of the output (e.g., map data), as output is made available once messages from the several streams have been checked by the integrity verification, aggregated (where applicable), and/or used for correcting referential integrity or other issues.

The sequence of output messages may comprise several output messages that each include aggregated information from messages of at least two different streams of the several streams.

Thereby, the sequence of output messages comprises such aggregated information where possible.

The sequence of output messages may comprise several other output messages that each include information based on messages included in a same stream of the several streams.

Thereby, modifications of a map layer that cannot be aggregated with modifications of other map layers, as indicated by the several streams, are provided in the output stream.

The processing system may receive the several streams from several map layer provision systems (such as several distinct map layer provision systems).

Thereby, the different map layers may be provided by different map layer provision systems, further enhancing the flexibility in modifying the several map layers is enhanced.

Each of the several map layer provision systems may be associated with a different one of the several map layers.

Thereby, the different map layers may be provided by different map layer provision systems, further enhancing the flexibility in modifying the several map layers is enhanced.

The several map layer provision systems may be operative to implement modifications of map object definitions in different map layers independently of each other.

Thereby, the different map layers may be provided by different map layer provision systems, further enhancing the flexibility in modifying the several map layers is enhanced.

Generating the output may comprise generating first output for a first map product and second output for a second map product.

Thereby, different map products may be generated based on the several streams.

The integrity verification may be performed separately for the first map product and the second map product.

Thereby, the stream processing can take into account that different streams may be required for generating the first map product and the second map products. Alternatively or additionally, the stream processing can take into account that different requirements may exist with regard to, e.g., freshness and/or quality (e.g., accuracy) of the first and second map products, so that different integrity verification instances are useful.

The method may comprise triggering or performing at least one action based at least on the output.

Thereby, the output (e.g., an output stream providing map data) is used for performing one or several actions.

The at least one action may comprise at least one control action performed by at least one map data consumer responsive to the output.

Thereby, the output (e.g., an output stream providing map data) is used for performing one or several control actions.

The action may comprise one, several or all of a route search, a route guidance, a driver assistance function, an advanced driver assistance function, an automated driving function, a traffic flow control.

Thereby, the output (e.g., an output stream providing map data) is used for performing vehicle- or other navigation-related functions.

According to an aspect of the invention, a method of modifying map data is provided. The method comprises obtaining, by a processing system, at least one stream indicative of modifications of at least one of several map layers. The method comprises performing, by the processing system, a stream processing of the at least one stream. The stream processing comprises an integrity verification to verify integrity of the map layer modified as indicated by the stream. The stream processing comprises generating output based at least on a result of the integrity verification.

Various effects and advantages are associated with the method. Information on modifications of the map layer is obtained as a stream. Thus, it is not required that modifications made to the map layer are performed in accordance with a previously agreed upon timing (e.g., synchronously). The stream processing that includes an integrity verification is operative to detect any inconsistencies that may be caused by modifications of the map layer or, optionally and as previously described, other map layers. The stream processing can thereby reduce the risk that the output is affected by inconsistencies that can potentially be caused by modifications of the map layer or other map layers, or at least not on inconsistencies that are not tolerable for, e.g., safety reasons. Thus, by using the stream processing that includes the integrity verification, significantly enhanced versatility in modifying map layers is attained. The map layer can be modified in a manner that does not require temporal alignment with modifications of other map layers. The risk of the output (such as map data for use by a map data consumer) being corrupted due to inconsistencies is mitigated. Thereby, a more versatile technique of modifying a map layer is provided, while mitigating the risk of inconsistencies between different map layers affecting the map data provided to, e.g., map data consumers (such as systems for route planning and/or route search, navigation, driver assistance, advanced driver assistance, and/or autonomous driving).

The method may comprise receiving several streams associated with several map layers. The stream processing may comprise performing the integrity verification based on the several streams.

Thereby, the risk of the output (such as map data for use by a map data consumer) being corrupted due to an inconsistency in any of the several map layers is mitigated.

The integrity verification may comprise identifying an inconsistency between a first map layer, modified as indicated by a first stream of the several streams, and a second map layer, modified as indicated by a second stream of the several streams.

Thereby, the risk of the output (such as map data for use by a map data consumer) being corrupted due to inconsistencies between the several map layers is mitigated.

The integrity verification may comprise identifying, based on the several streams, a reference in one of the first and second map layers to an object definition deleted from the other one of the first and second map layers.

Thereby, the risk of the output (such as map data for use by a map data consumer) being corrupted due to referential inconsistencies between the several map layers is mitigated.

The integrity verification may comprise identifying, based on the several streams, a definition of an object in one of the several map layers that already exists in the same map layer.

Thereby, the risk of the output (such as map data for use by a map data consumer) being corrupted due to logical or syntactical integrity issues is mitigated.

The several map layers may form an acyclic graph of map layers.

Thereby, versatility in dependencies between the map layers is attained. It is possible but not requires that the map layers form a hierarchical structure.

Each of the several streams may comprise data indicative of modifications of one of several map layers with which the stream is associated. The several map layers comprise a child layer and one or several parent layers. The several map layers comprise map object definitions, wherein the map object definitions comprise parent layer map object definitions in the one or several parent layers and child layer map object definitions in the child layer. The child layer map object definitions include references to parent layer map objects defined by the parent layer map object definitions.

Thereby, the stream processing is applied to process streams indicative of modifications of several map layers that reference each other.

Additional features that may be implemented in the method and the effects respectively attained thereby correspond to the features discussed in association with the method according to a first aspect of the invention.

According to another aspect of the invention, there is disclosed machine-readable instruction code comprising instructions which, when executed by at least one processing circuit, cause the at least one processing circuit to perform the method of any one aspect or embodiment.

According to another aspect of the invention, there is disclosed a data carrier comprising machine-readable instruction code comprising instructions which, when executed by at least one processing circuit, cause the at least one processing circuit to perform the method of any one aspect or embodiment.

The data carrier may comprise a non-transitory storage medium having stored thereon the machine-readable instruction code.

There is also provided a processing system for modifying map data. The processing system comprises at least one interface operative to obtain (e.g., receive) several streams. Each of the several streams comprises data indicative of modifications of one of several map layers with which the stream is associated. The several map layers comprise a child layer and one or several parent layers. The several map layers comprise map object definitions, wherein the map object definitions comprise parent layer map object definitions in the one or several parent layers and child layer map object definitions in the child layer. The child layer map object definitions include references to parent layer map objects defined by the parent layer map object definitions. The processing system comprises at least one processing circuit operative to perform a stream processing of the several streams. The processing system is operative such that the stream processing comprises an integrity verification to verify integrity of the child layer map object definitions modified as indicated by a stream of the several streams that is associated with the child layer and of the parent layer map object definitions modified as indicated by at least another one of the several streams that is associated with the one or several parent layers. The processing system is operative such that the stream processing comprises generating output based at least on a result of the integrity verification.

Various effects and advantages are associated with the processing system. Information on modifications of any one of the several map layers is obtained as a stream. Thus, it is not required that modifications made to different map layers, of which the streams associated with the map layers are indicative, are performed in accordance with a previously agreed upon timing (e.g., synchronously). The processing system performs the stream processing that includes an integrity verification and is thereby operative to detect any inconsistencies that may be caused by modifications of different map layers that are performed in an asynchronous manner. The processing system can thereby reduce the risk of the output being adversely affected by inconsistencies that can potentially be caused by modifications of different map layers, or, at least, reduce the risk of the output being affected by inconsistencies that are not tolerable for, e.g., safety reasons.

Thus, the processing system operative to perform the stream processing that includes the integrity verification provides significantly enhanced versatility in modifying map layers. The map layers can be modified in a manner that does not require temporal alignment of the modifications of the various map layers. The risk of the output (such as map data for use by a map data consumer) being corrupted due to inconsistencies is mitigated. Thereby, a more versatile technique of modifying map data in various map layers is provided, while mitigating the risk of inconsistencies between different map layers affecting the map data provided to, e.g., map data consumers (such as systems for route planning and/or route search, navigation, driver assistance, advanced driver assistance, and/or autonomous driving).

The processing system may be operative to perform the method of any aspect or embodiment disclosed herein.

There is also provided a processing system for modifying map data. The processing system comprises at least one interface operative to obtain (e.g., receive) at least one stream indicative of modifications of at least one of several map layers. The processing system comprises at least one processing circuit operative to perform a stream processing of the at least one stream. The stream processing comprises an integrity verification to verify integrity of the map layer modified as indicated by the stream. The stream processing comprises generating output based at least on a result of the integrity verification.

Various effects and advantages are associated with the processing system. Information on modifications of the map layer is obtained as a stream. Thus, it is not required that modifications made to the map layer are performed in accordance with a previously agreed upon timing (e.g., synchronously). The stream processing that includes an integrity verification is operative to detect any inconsistencies that may be caused by modifications of the map layer or, optionally and as previously described, other map layers. The stream processing can thereby reduce the risk that the output is affected by inconsistencies that can potentially be caused by modifications of the map layer or other map layers, or at least not on inconsistencies that are not tolerable for, e.g., safety reasons. Thus, by using the stream processing that includes the integrity verification, significantly enhanced versatility in modifying map layers is attained. The map layer can be modified in a manner that does not require temporal alignment with modifications of other map layers. The risk of the output (such as map data for use by a map data consumer) being corrupted due to inconsistencies is mitigated. Thereby, a more versatile technique of modifying a map layer is provided, while mitigating the risk of inconsistencies between different map layers affecting the map data provided to, e.g., map data consumers (such as systems for route planning and/or route search, navigation, driver assistance, advanced driver assistance, and/or autonomous driving).

The processing system may be operative to perform the method of any aspect or embodiment disclosed herein.

There is also provided a system which comprises the processing system and at least one map data consumer. The processing system is operative to provide the output for use by the at least one map data consumer.

Thereby, the output (e.g., map data) is made available for use by the map data consumer. The map data consumer may comprise a device or vehicle system operative to perform, based at least on the output, one, several or all of a route search, a route guidance, a driver assistance function, an advanced driver assistance function, an automated driving function, a traffic flow control.

The at least one map data consumer may comprise a control circuit operative to control a vehicle actuator and/or a vehicle human machine interface based at least on the output.

Thereby, the output (e.g., map data) is made available for vehicular control operations.

Thereby, the output (e.g., an output stream providing map data) is used for performing vehicle- or other navigation-related functions.

The system may comprise several map layer provision systems operative to provide the several streams. Each of the map layer provision systems may be associated with at least one (e.g., with exactly one) of the several map layers.

Thereby, further enhanced flexibility is attained for modifying map data.

The map layer provision systems may comprise at least one map layer provision system operative to modify a map layer of the various map layers responsive to observations (e.g., of links of a navigable network, traffic signs, and/or traffic conditions) captured using sensing equipment. The sensing equipment may be installed in fleet of probes, such as vehicular probes.

Thereby, suitable modifications of map layers that improve the quality of the output (e.g., the accuracy of the output as compared to real-life infrastructure conditions) may be performed, e.g., automatically.

The several map layer provision systems may be operative to perform map layer modifications in an asynchronous manner, i.e., without temporal alignment between the several map layer provision systems.

Thereby, modifications in a map layer may be implemented without having to temporally align with the other map layer provision systems. This is beneficial for freshness of the provided output.

The several map layer provision systems may be operative such that the stream of the several streams that is associated with the child layer may comprise a first sequence of messages. The several map layer provision systems may be operative such that the at least another one of the several streams that is associated with the one or several parent layers may comprise a second sequence of messages. The several map layer provision systems may be operative such that a message timing of the first sequence of messages is independent of a message timing of the second sequence of messages.

Thereby, information on modifications in any one of the several map layers may be provided with a timing that depends on when the modifications in the respective map layer are performed, without requiring temporal alignment with the modifications in the parent layer(s) that is reflected by the second sequence of messages. This is beneficial for freshness of the output (e.g., map data provided to a map data consumer).

The several map layer provision systems may be operative such that the first stream of messages may comprise a first message that provides information on a child layer modification of the child layer triggered by a parent layer modification of a parent layer of the one or several parent layers, wherein a second message of the second sequence of messages provides information on the parent layer modification, wherein the processing system receives the first message at a different time than the second message (e.g., with a delay that exceeds a processing time for making the child layer modification responsive to the parent layer modification).

Thereby, greater flexibility is attained in the timing at which the several map layers can be modified.

The several map layer provision systems may be operative such that the several map layers define an acyclic graph.

Thereby, flexibility is attained in the references between map layers that are supported.

The several map layer provision systems may be operative such that the several map layers may comprise a base map layer defining nodes and links of a navigable network.

Thereby, the basic geometry of a network of navigable links are defined and can be referenced by other map layers.

The several map layer provision systems may be operative such that the acyclic graph defines a hierarchical map layer structure that comprises the base map layer at a root.

Thereby, dependencies between map layers can be organized in a hierarchical manner, which may facilitate prioritization of modifications.

The several map layer provision systems may be operative such that the acyclic graph comprises one or several map layers referencing the base map layer and comprising one, several, or all of: a turn restrictions layer; a speed limits layer; a speed profile layer; a one way layer; a blocked passages layer; a buildings layer; an address points layer; a points of interest layer; a parking information layer; a point of interest layer.

Thereby, information useful for performing various tasks associated with route search, navigation, driver assistance, advanced driver assistance, and/or autonomous driving can be harnessed to generate the output.

According to a further embodiment, there is disclosed a use of the method, the processing system, and/or the machine-readable instruction code for generating map data for use by map data consumers, wherein the map data comprises or is based on the output, wherein the output comprises an output stream, and wherein the several streams from which the output is generated are asynchronous.

According to a further embodiment, there is disclosed a method of performing a control operation onboard a vehicle based on map data generated from map layers that are modified in an asynchronous manner, wherein the comprises or is based on output generated using the method of modifying map data, the processing system, or the machine-readable instruction code.

The control operation may comprise an actuator control operation.

While the techniques disclosed herein may be used for navigation, route search, driver assistance and autonomous driving functions, they are not limited thereto.

### BRIEF DESCRIPTION OF THE DRAWINGS

Embodiments of the invention will be described with reference to the drawings in which similar or corresponding reference signs designate elements having similar or corresponding configuration and/or function.
Figure 1 is a schematic representation of a processing system operative to perform a method of modifying map data.
Figure 2 is a schematic representation of a system comprising the processing system.
Figure 3 is a schematic functional representation of at least one processing circuit of the processing system.
Figure 4 is a schematic functional representation of at least one processing circuit of the processing system.
Figure 5 is a schematic representation of map layers.
Figure 6 is a flow chart of a method.
Figure 7 is a flow chart of a method.
Figure 8 is a schematic representation of a system comprising the processing system, illustrating several streams received by the processing system.
Figure 9 is a schematic representation of a system comprising the processing system, illustrating several streams received by the processing system.
Figure 10 is a schematic representation of a processing system operative to perform a method of modifying map data.
Figure 11 is a schematic representation of a system comprising the processing system.
Figure 12 is a schematic representation of a system comprising the processing system.
Figure 13 is a schematic representation of a system comprising the processing system.
Figure 14 is a schematic representation of a system comprising the processing system.
Figure 15 is a schematic representation of a system comprising the processing system, illustrating several streams received by the processing system and an output stream provided by the processing stream.
Figure 16 is a flow chart of a method.
Figure 17 is a flow chart of a method.
Figure 18 is a schematic representation of a map layer provision system.
Figure 19 is a schematic representation of a map layer provision system.
Figure 20 is a flow chart of a method.
Figure 21 is a flow chart of a method.
Figure 22 is a schematic representation of a system comprising the processing system and several map layer provision systems.
Figure 23 is a schematic representation of an acyclic graph of several map layers that provide several streams processed by the processing system.
Figure 24 is a schematic representation illustrative of operation of the processing system.
Figure 25 shows exemplary messages of streams.
Figure 26 is a schematic representation illustrating operation of the processing system.
Figure 27 is a schematic representation illustrating operation of the processing system.
Figure 28 is a schematic representation illustrating operation of the processing system.
Figure 29 is a schematic representation illustrating operation of the processing system.
Figure 30 is a schematic representation of a processing system operative to perform a method of modifying map data.
Figure 31 is a schematic representation of a system comprising the processing system.
Figure 32 is a schematic representation of a system comprising the processing system.
Figure 33 is a schematic representation of a system comprising the processing system.
Figure 34 is a schematic representation of a system comprising the processing system.
Figure 35 is a schematic representation of a system comprising the processing system.
Figure 36 is a flow chart of a method.
Figure 37 is a flow chart of a method.

### DETAILED DESCRIPTION OF EMBODIMENTS

Embodiments of the invention will be described in detail. While some embodiments will be described in association with specific exemplary map layers, the embodiments are not limited thereto.

The features of embodiments may be combined with each other unless specifically stated otherwise.

The techniques disclosed herein in detail may be used to modify map data. The map data may be based on several map layers. The techniques disclosed herein are operative to provide map data based on several map layers. The techniques disclosed herein are operative to provide different types of map data, such as map data for different sets of vehicles and/or different purposes (such as vehicular navigation and non-vehicular navigation).

The availability of different map layers in electronic map data is useful for a variety of applications. Different map layers can be combined to generate output, making it possible to customize the map data based on the needs of the specific applications. Examples for such map layers include road network elements, restrictions (such as speed limits, turning restrictions, etc.) points of interest, street names, names of points of interest, without being limited thereto. The availability of multiple map layers is beneficial for providers of map data, as it provides opportunities for customization.

Different map layers may be maintained by and/or under the control of different map layer providers. This has various benefits, such as being able to utilize a provider's data quality and/or freshness for a map layer (such as restrictions) and using another provider's data quality and/or freshness for another map layer (such as points of interest or names). When different map layers are being taken care of by and/or under the control of different map layer providers, it is conventionally important that modifications in different map layers be performed in a coordinated manner to ensure consistency. This can be done by implementing modifications in a synchronized manner. However, such an approach restricts the flexibility in updating individual map layers. Such an approach may also require modifications of some map layers to be postponed until map layers can be updated in a synchronized manner.

The techniques discloses herein are operative to modify map data based on modifications of a plurality of map layers. The techniques disclosed herein use a stream processing to process several streams, each indicative of modifications of a different map layer, to generate output. The stream processing reduces and may even eliminate the need for synchronizing modifications in the various map layers with each other. At the same time, a modification of one of the map layers can be caused by a modification in a different one of the map layers.

The techniques disclosed herein are operative to provide a stream processing that mitigates or eliminates the risk of output being based on information in one or several map layer(s) that gives rise to an integrity issue, such as a referential, logical, and/or syntactical integrity issue. To this end, the techniques disclosed herein are operative to implement a stream processing that includes an integrity verification. The integrity verification may comprise a referential integrity verification, without being limited thereto.

As used herein, a "stream" refers to a flow of data, with the stream processing being operative to process messages of the stream one after another. A relative timing of messages in the stream can be variable. The variability exists both within a stream but also between different streams. Thus, the streams may comprise several streams distinguished from each other by a relative timing of messages (e.g., different delays between successive messages in the various streams). The stream processing receives messages from each of the streams in an ongoing basis (i.e., continually).

As used herein, streams are referred to as "asynchronous" when the relative timing of messages in the streams is different.

As used herein, a "stream processing" involves processing and analyzing messages are they are being received. Instead of waiting for batch processing, stream processing enables messages including information on modifications of map layers, as reflected by messages included in the received streams, to be processed as they arrive. This reduces a time delay between receipt of a message as input of the stream processing and provision of a message of an output of the stream processing. The temporal aspect of streams means that the processing system is operative to process messages of the various streams even though the messages may arrive at irregular intervals and/or with different delays between them.

As used herein, a "processing system" operative to perform a stream processing may be implemented as a distributed system, e.g., as a distributed architectures to handle the volumes of incoming data.

As used herein, an "output" of the stream processing may comprise an output stream. The output stream may comprise output messages which may have varying delay between successive output messages. The output may comprise map data for use by map data consumers and/or may be operative for providing map data to map data consumers. The output may comprise output messages that include aggregate information from at least two different map layers.

The stream processing may comprise a binding. As used herein, a "binding" may comprise combining information from several streams, using a stream processing that comprises processing messages of the several streams as they arrive and determining whether messages from different streams include information relating to a same map object that can be combined into an output stream message of an output stream of the binding.

As used herein, a "map data consumer" refers to any device or system operative to process map data to perform an action. Examples for map data consumers include portable communication terminals (such as smartphones), vehicle processing systems, vehicles, navigation devices, wearables, without being limited thereto. The map data consumer may be operative to perform a control action to control, e.g., a vehicle actuator and/or a human machine interface (HMI).

As used herein, "map layer provision systems" operate as sources of the several streams. The map layer provision systems may but do not need to be implemented in separate hardware. The map layer provision systems may be implemented in a distributed architecture, which may optionally also implement the stream processing.

As used herein, a "map object definition" refers to a definition included in at least one of the map layers. There may be different types of map object definitions, such as a first type (e.g., for defining nodes of a navigable network), a second type (e.g., for defining links of the navigable network), and a third type (e.g., for defining information related to objects of the first or second types or of other objects of the third type). Map object definitions of the first type (e.g., "node type") may define coordinates (such as latitude and longitude, without being limited thereto) of the respective node. Map object definitions of the second type (e.g., "way type") may define at least which node(s) is/are part of a way; it is noted that a "way" can also reasonably be defined by a single node, optionally in association with attributes, e.g., when the way defines a turning area or roundabout. Map object definitions of a third type (which may also be referred to as relation) can define characteristics such as names that may be associated with objects of the first or second type or even the third type (such as a name of a point of interest (POI)) and can, thus, reference objects of any of the first, second, or third types. Other map object definitions may be used.

As used herein, a "modification" of a map object definition may be either one of an addition of a new map object definition, a deletion of an existing map object definition, the change of an existing map object definition.

As used herein, a "syntactical" integrity refers to syntax in the field of databases, rather than the field of linguistics.

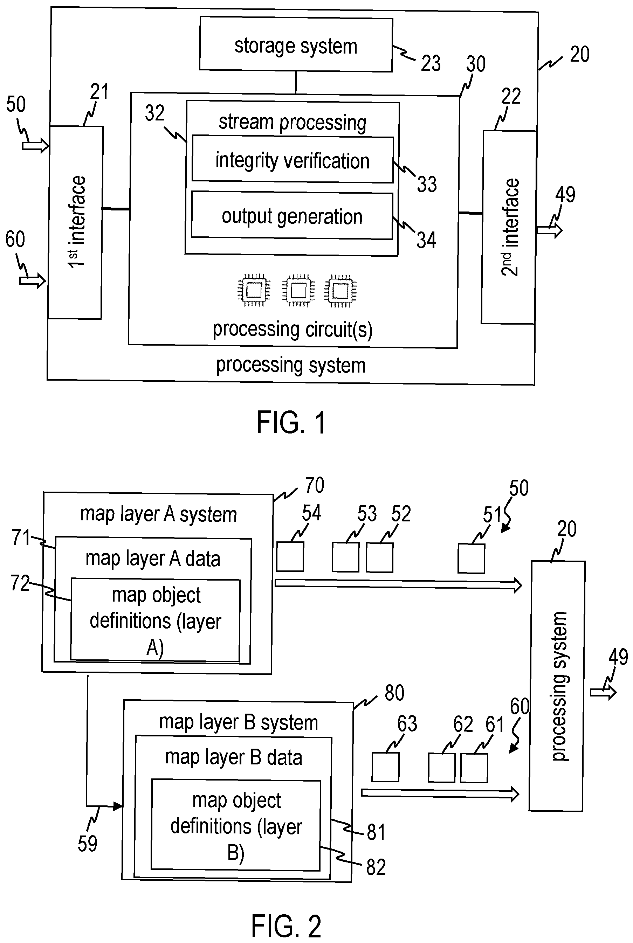

Figure 1 is a schematic representation of a processing system 20 operative to perform a method of modifying map data.

The processing system 20 comprises at least one interface 21 operative to receive several streams 50, 60. The processing system 20 comprises at least one processing circuit 30 operative to perform a stream processing 32. The at least one processing circuit 30 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

Each of the streams 50, 60 comprises a plurality of messages. It is not required that the messages in the streams 50, 60 the received with a given timing. The several streams 50, 60 may be asynchronous in the sense that the timing and even the relative timing of messages in the different streams 50, 60 is not need to be aligned. The messages in each of the several streams 50, 60 are indicative of modifications of a map layer. Each of the several streams 50, 60 may include messages indicative of modifications of a single map layer only. Different streams 50, 60 may relate to different ones of several map layers.

The processing system 20 is generally operative to process the streams 50, 60 by performing the stream processing 32. The stream processing 32 is operative to process messages of the streams 50, 60 as they are being received by the processing system 20. It is not required that all messages be received prior to generating output, by the processing system 20, based at least on the payload data of already received messages of the streams 50, 60.

The function of the stream processing 32 is to provide output 49, which may preferably include an output stream, that aggregates information on modifications of different map layers. To this end, the stream processing 32 may be operative to identify messages in a same and/or different ones of the several streams 50, 60 that relate to a same map object (e.g., to a same node, a same way, a same point of interest, a same restriction, without being limited thereto) and generate an output message of the output stream that aggregates this information. Stream processing techniques such as a use of a sliding window may be employed to balance the aggregation of information and timeliness of the provision of an output message.

Thus, the stream processing 32 provides output 49 that is based on information on several map layers, respectively modified as indicated by the several streams 50, 60. Such output 49 may be useful for inclusion in map data that is provided to map data consumers.

The stream processing 32 comprises an integrity verification 33. The integrity verification 33 is operative to determine whether a modification of at least one map layer, as indicated by at least one of the streams 50, 60, gives rise to an inconsistency. Depending on the integrity verification implementation, the integrity verification 33 may be operative to determine whether a modification of at least one map layer, as indicated by at least one of the streams 50, 60, gives rise to an inconsistency between different map layers. This may happen when an object is deleted from a map layer may being still referenced by another objects in another map layer. Such an inconsistency between different map layers may also exist when an object is created in a map layer that references another object that does not or no longer exist in another map layer. The stream processing 32 and, in particular, the integrity verification 33 may alternatively or additionally be operative to detect, based on the several streams 50, 60, whether there is an inconsistency within at least one of the map layers. Examples for such inconsistencies include syntactical inconsistencies (in which modifications are not conformant to an existing set of syntactical rules with which the various map layers and having to comply) and/or logical inconsistencies (such as a duplicate creation of an already existing map object).

The stream processing 32 comprises an output generation 34. The output generation 34 may be operative to generate a stream of output messages. The output generation 34 may be operative such that at least some of the output messages include information aggregated from several ones of the different streams 50, 60 received at the at least one interface 21. The output generation 34 may alternatively or additionally be operative such that the output 49 comprises feedback informing map layer provision systems of a detected inconsistencies. The feedback or other output 49 may be operative to perform or to trigger a corrective action responsive to a detected inconsistency.

The processing system 20 may comprise at least one further interface 22 to output the output stream and/or feedback and/or other output that causes a corrective action to be performed. Alternatively or additionally, the processing system 20 may be operative to output the output stream and/or feedback and/or other output that causes the corrective action to be performed over the at least one interface 21 over which the several streams 50, 60 are received. The processing system 20 may comprise an interface that is operative to both receive the several streams and to provide the output.

The processing system 20 comprises a storage system 23. The storage system 23 is operative to at least temporarily store data items useful to perform the integrity verification 33. For illustration, as will be explained in more detail herein, the integrity verification 33 may be operative to, responsive to detection of an inconsistency, cause a data item to be stored in the storage system 23, with the data item being indicative of or otherwise based on a message determined to cause the inconsistency. Thereafter, the integrity verification 33 may process additional messages received in other streams and/or a same stream that included the message causing the inconsistency, to determine whether any of the additional messages indicates a modification that resolves the inconsistency. Thereby, the asynchronous character of the various streams 50, 60 can be accommodated without having to take excessive corrective actions. In particular, temporarily existing inconsistencies indicated by the several streams 50, 62 do not affect the quality of the map data provided to map data consumers if the processing system 20 holds of on generating an output message based on a message determined to cause an inconsistency.

The storage system 23 or a storage system separate therefrom may store machine-readable instruction code which, when executed by the at least one processing circuit 30, causes the processing system 20 to perform the method of modifying map data.

Figure 2 shows a schematic representation of a system that comprises a map layer provision system 70 operative to provide a stream 50 of the several streams 50, 60 obtained by the processing system 20, another map layer provision system 80 operative to provide another streams 60 of the several streams 50, 60, and the processing system 20 operative to perform stream processing of the several streams 50, 60.

The map layer provision system 70 is operative to maintain data 71 for a map layer, which is also referred to as map layer A in the following description. The map layer data 71 includes map object definitions 72. The map object definitions 72 may include definitions of components of a navigable network (such as nodes and/or links of the navigable network) or information that is associated with such components, such as restrictions, names, street names, points of interest, without being limited thereto. The map layer provision system 70 is operative to modify the map object definitions 72. The map layer provision system 70 may be operative to perform modifications which may be any one or any combination of: an addition of a new map object definition, a deletion of an existing map object definition, the change of an existing map object definition.

The map layer provision system 70 is operative to maintain versioned map layer data. Modifications in map object definitions 72 may cause the version to change. Information on the respective version may be provided by the map layer provision system 70 to the processing system 20, for example as part of the messages of the stream 50, and/or the other map layer provision system 80.

The map layer provision system 70 is operative to generate the stream 50 including a plurality of messages 51, 52, 53, 54. A time delay between successive ones of the messages 51, 52, 53, 54 may be variable. I.e., the stream 50 may include successive messages separated in time by a given time delay and other successive messages separated in time by another time delay different from the given time delay. The map layer provision system 70 may be operative such that, responsive to modifying a map object definition of the map object definitions 72, it generates and outputs an associated message of the stream 50. The map layer provision system 70 may be operative such that a message of the stream 50 providing information on a modification performed to the map object definitions 72 may be output in the stream 50 without the map layer provision system 70 aligning a timing of the message with any modifications and/or any message outputting by the other map layer provision system 80.

The map layer provision system 70 may also be operative to inform the other map layer provision system 80 of a version of its map layer data and/or of the modification that it made. In other words, the messages of the stream 50 or other information relating to the modifications made by the map layer provision system 70 may also be provided to the other map layer provision system 80. To this end, the different map layer provision systems 70, 80 may be communicatively interfaced via at least one communication link 59.

The other map layer provision system 80 is operative to maintain data 81 for another map layer, which is also referred to as map layer B in the following description. The other map layer data 81 includes other map object definitions 82. The other map object definitions 82 may include information that is associated with such components, such as restrictions, names, street names, points of interest, without being limited thereto. The other map layer provision system 80 is operative to modify the other map object definitions 82. The other map layer provision system 80 may be operative to perform modifications which may be any one or any combination of: an addition of a new map object definition, a deletion of an existing map object definition, the change of an existing map object definition.

The other map layer provision system 80 is operative to maintain versioned map layer data. Modifications in the other map object definitions 82 may cause the version to change. Information on the respective version may be provided by the other map layer provision system 80 to the processing system 20, for example as part of the messages of the other stream 60, and/or the map layer provision system 70.

The other map layer provision system 80 may be operative to specify the version of the map data of the map layer provision system 70 (such as the version of the map object definitions 72) to which a modification in the other map object definitions 82 refers and/or to which the map layer provision system 80 refers when generating a message of a stream output by the map layer provision system 70.

The other map layer provision system 80 is operative to generate the other stream 60 including a plurality of messages 61, 62, 63, 64. A time delay between successive ones of the messages 61, 62, 63, 64 may be variable. I.e., the other stream 60 may include successive messages separated in time by a given time delay and other successive messages separated in time by another time delay different from the given time delay. The other map layer provision system 80 may be operative such that, responsive to modifying a map object definition of the other map object definitions 82, it generates and outputs an associated message of the other stream 60. The other map layer provision system 80 may be operative such that a message of the other stream 60 providing information on a modification performed to the other map object definitions 82 may be output in the other stream 60 without the other map layer provision system 80 aligning a timing of the message with any modifications and/or any message outputting by the map layer provision system 70. The other map layer provision system 80 may be operative such that a message of the other stream 60 providing information on a modification performed to the other map object definitions 82 includes information on a version of the data of the map layer provision system 70 (such as the version of the map object definitions 72) to which the modification refers.

The other map layer provision system 80 may optionally also be operative to receive from the map layer provision system 70 information on a version of map layer data and/or of any modification that was made by the other map layer provision system 70. The other map layer provision system 80 may be operative to acknowledge such information on modifications received from the map layer provision system 70, via, e.g., the at least one communication link 59.

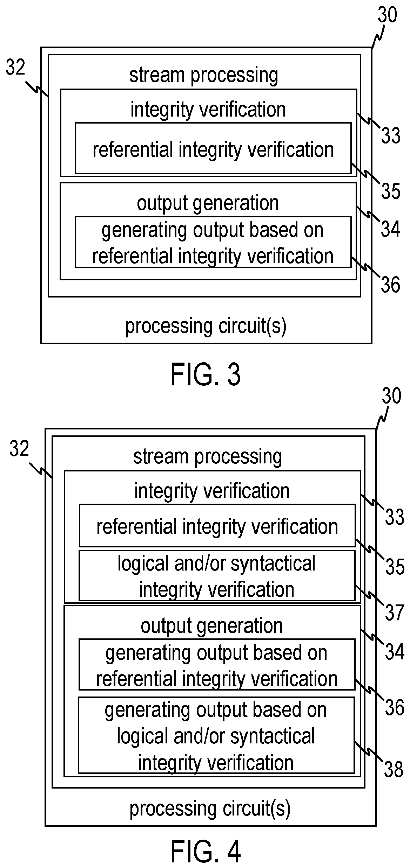

Figure 3 is a functional representation of stream processing 32 that may be performed by the processing system 20. The integrity verification 33 may comprise a referential integrity verification 35. The referential integrity verification 35 is operative to detect inconsistencies between different map layers caused by a modification of at least one of the map layers, as indicated by the several streams 50, 60. The referential integrity verification 35 may be operative to determine, based on the received several streams, whether one of the messages included in the several streams 50, 60 indicates deletion of a map object that is referenced by an existing, modified or newly created map object definition in another map layer, as also indicated by the several streams 50, 60. Alternatively or additionally, the referential integrity verification 35 may be operative to determine, based on the received several streams, with one of the messages included in the several streams 50, 60 indicates a change or addition of a map object definition that references another, previously deleted map object. Alternative or additional referential integrity checks may be performed by the referential integrity verification 35.

The output generation 34 may comprise generating 36 the output based on a result of the referential integrity verification. The result of the referential integrity verification may be used in various ways when generating the output. For illustration, information on a modification received in the several streams 50, 60 may be used for generating an output message of an output stream for use by a map data consumer selectively dependent on whether the referential integrity verification verified that the modification that do not give rise to a referential integrity issue. Alternatively or additionally, the result of the referential integrity verification may be used to determine whether information on a modification received of the several streams 50, 60 is to be used for generating an output message of the output stream for use by a map data consumer without delay or after a wait period which allows the additional messages of the several streams 50, 60 to be checked to determine whether a detected inconsistency is remedied. Alternatively or additionally, the result of the referential integrity verification may be used to generate feedback that causes rectification of the referential integrity issue.

Alternatively or in addition to performing a referential integrity verification and generating output based on a result of the referential integrity verification, the stream processing may perform one or several other integrity verifications, such as a logical and/or syntactical integrity verification.

Figure 4 is a functional representation of stream processing 32 that may be performed by the processing system 20. The integrity verification 33 may comprise a logical and/or syntactical integrity verification 37. The logical and/or syntactical integrity verification 37 is operative to detect modifications that cause logical issues and/or syntactical issues, such as the generation of duplicate map objects and/or non-adherence to syntactical rules with which the map layers must comply. The logical and/or syntactical integrity verification 37 may be operative to detect creation of a duplicate of an already existing map object. Alternative or additional logical and/or syntactical integrity checks may be performed by the logical and/or syntactical integrity verification 37.

The output generation 34 may comprise generating 38 the output based on a result of the logical and/or syntactical integrity verification. The result of the logical and/or syntactical integrity verification may be used in various ways when generating the output. For illustration, information on a modification received in the several streams 50, 60 may be used for generating an output message of an output stream for use by a map data consumer selectively dependent on whether the logical and/or syntactical integrity verification verified that the modification that do not give rise to a logical and/or syntactical integrity issue. Alternatively or additionally, the result of the logical and/or syntactical integrity verification may be used to determine whether information on a modification received of the several streams 50, 60 is to be used for generating an output message of the output stream for use by a map data consumer without delay or after a wait period which allows the additional messages of the several streams 50, 60 to be checked to determine whether a detected inconsistency is remedied. Alternatively or additionally, the result of the logical and/or syntactical integrity verification may be used to generate feedback that causes rectification of the logical and/or syntactical integrity issue.

The various map layers may form an acyclic graph. A map layer of the map layers may include map object definitions that refer to map objects defined by a different map layer. For illustration, a restrictions layer, such as a speed limits layer, a turning restrictions layer, a blocked passages layer, a one-way street layer, etc., may define the respective restriction with reference to a way or a node defined by a different map layer. For further illustration, a points of interest layer may define points of interest with reference to of a node defined by different map layer. For still further illustration, a names layer may define names for points of interest defined by different layer (the points of interest layer) and/or for ways defined by the another layer (such as a base map layer). It is such a dependency that can give rise to referential integrity issues.

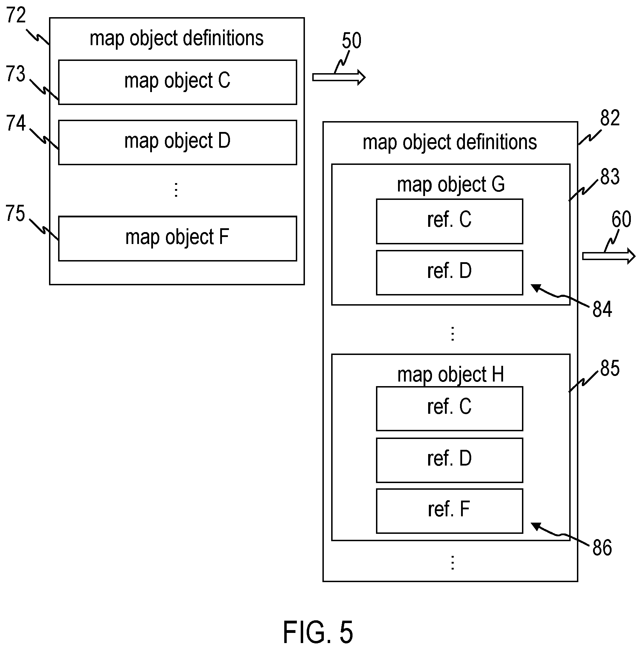

Figure 5 is schematically illustrates that the map object definitions 72 of a map layer define various map objects 73, 74, 75. The map object definitions 82 of a different map layer defining other map objects 83, 85, which include references 84, 86 to the map object definitions 73, 74, 75. Modifications of the map object definitions 73, 74, 75 or modifications of the other map object definitions 83, 85 may create referential integrity issues, which can be detected by the processing system 20 using a stream processing techniques.

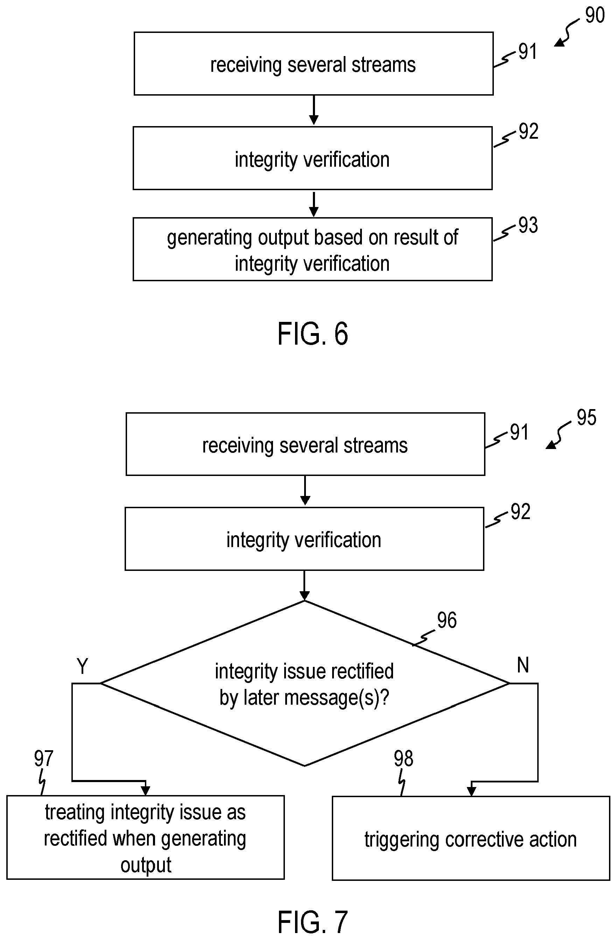

Figure 6 is a flow chart of a method 90. The method 90 may be performed automatically by the processing system 20.

At process block 91, the processing system 20 receives the several streams. Each of the several streams is indicative of modifications of map layer data of a map layer with which the respective stream is associated. The processing system 20 performs stream processing of the several streams. The stream processing allows an output message of an output stream to be generated, or generation of the output message to be started, based on processing of one or several messages included in the received streams, without having to wait for subsequent messages in the several streams.

At process block 92, an integrity verification is performed by the processing system. The integrity verification may comprise a referential integrity verification. The referential integrity verification may comprise determining, based on the several streams, whether the several streams are indicative of a modification of at least one of the map layers that creates a referential integrity issue, such as a reference to a non-existing map object in a different map layer. Alternatively or additionally, the integrity verification may comprise a logical verification. The logical verification may comprise checking whether the several streams include at least one message indicative of a generation of a duplicate of an already existing map object. The logical verification may comprise a syntactical verification, in which the processing system checks whether the several streams include information on a modification that is not in conformity with syntactical rules with which the map layers are to comply.

At process block 93, the processing system 20 generates output. The output generation is based at least on a result of the integrity verification. The result of the referential integrity verification may be used in various ways when generating the output. For illustration, information on a modification received in the several streams 50, 60 may be used for generating an output message of an output stream for use by a map data consumer selectively dependent on whether the referential integrity verification verified that the modification that do not give rise to a referential integrity issue. Alternatively or additionally, the result of the referential integrity verification may be used to determine whether information on a modification received of the several streams 50, 60 is to be used for generating an output message of the output stream for use by a map data consumer without delay or after a wait period which allows the additional messages of the several streams 50, 60 to be checked to determine whether a detected inconsistency is remedied. Alternatively or additionally, the result of the referential integrity verification may be used to generate feedback that causes rectification of the referential integrity issue.

Alternatively or additionally, at process block 93, the result of the logical and/or syntactical integrity verification may be used in various ways when generating the output. For illustration, information on a modification received in the several streams 50, 60 may be used for generating an output message of an output stream for use by a map data consumer selectively dependent on whether the logical and/or syntactical integrity verification verified that the modification that do not give rise to a logical and/or syntactical integrity issue. Alternatively or additionally, the result of the logical and/or syntactical integrity verification may be used to determine whether information on a modification received of the several streams 50, 60 is to be used for generating an output message of the output stream for use by a map data consumer without delay or after a wait period which allows the additional messages of the several streams 50, 60 to be checked to determine whether a detected inconsistency is remedied. Alternatively or additionally, the result of the logical and/or syntactical integrity verification may be used to generate feedback that causes rectification of the logical and/or syntactical integrity issue.

Generating the output at process block 93 may comprise generating an output stream for use by at least one map data consumer. Generating the output stream may comprise including information from messages received in the several streams 50, 60 in output messages of the output stream selectively depending on confirming, in the integrity verification at process block 92, the there are no integrity issues.

Generating the output at process block 93 may also comprise generating output that triggers a corrective action, such as generating feedback to at least one map layer determined to be involved in an integrity issue to trigger correction.

Figure 7 is a flow chart of a method 95. The method 95 may be performed automatically by the processing system 20. Process blocks 91 and 92 may be performed as described with reference to Figure 6.

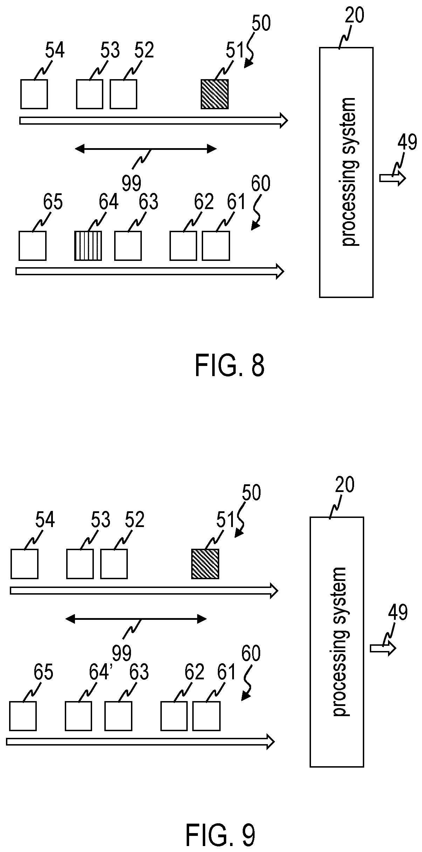

At process block 96, responsive to identifying an integrity issue (such as a referential integrity issue) in the integrity verification at process block 92, the processing system 20 does not immediately initiate the process of triggering a corrective action that performs additional processing. More specifically, at process block 96, the processing system 20 determines whether messages received in the several streams 50, 60 within a time period after detection of the integrity issue show that the integrity issue is already rectified by at least one other modification of, for example, the map layer from which the message causing the integrity issue originated and/or a map layer different from the map layer from which the message causing the integrity issue originated. This processing is operative to take into account the asynchronous nature of the several streams 50, 60. Implementations of the processing at process block 96 will be described in more detail with reference to Figure 8, Figure 9, Figure 10, and Figure 30.

At process block 97, if it is determined at process block 96 that one or several other messages received in the time period after detection of the integrity issue show that the integrity issue was already addressed, the processing system 20 is operative to treat the integrity issue is rectified when generating the output. In this case, the processing system 20 can generate output messages of an output stream for use by a map data consumer without having to generate feedback that triggers a corrective action, for example.

At process block 98, if it is determined at process block 96 that messages received in the time period after detection of the integrity issue to not indicate that the integrity issue was already addressed, the processing system 20 can be operative to trigger a corrective action. The corrective action may comprise a provision of feedback to one or several of the map layers involved in the integrity issue.

Operation of the processing system will be explained in more detail with reference to exemplary streams 50, 60 that are schematically illustrated in Figure 8 in Figure 9.

Figure 8 shows streams 50, 60 received by the processing system 20. The processing system 20 is operative to perform stream processing including an integrity verification of the several streams 50, 60. Stream 50 comprises a first sequence of messages 51, 52, 53, 54. Stream 60 comprises a second sequence of messages 61, 62, 63, 64, 65. As schematically illustrated by the pattern filled, messages 51 and 64 indicate modifications of different map layers that are related to a same map object. For illustration, message 51 may include the information that a node or a way has been deleted in a base map layer. Message 64 may include the information that a map object in another map layer that references this node or way (which is deleted according to message 51) is also deleted.

In this case, the processing system 20 determines, based on message 51, that deletion of the way or node creates an integrity issue, because the processing system 20 is not yet received any indication that the map object to which message 64 relates has also been deleted. Detection of this integrity issue triggers monitoring over a time period 99. Receipt of the message 64 within the time period 99 allows the processing system 20 to determine that the integrity issue is already resolved, so that no corrective action is to be taken in this regard.

The processing system 20 may generate an output message for inclusion in an output stream of the output 49, with the output message including an aggregate of the messages 51, 64, which both relate to the map object (albeit in different manner) for which message 51 indicates deletion of the respective map object (e.g., a node or way).

Figure 9 shows a variant in which the stream 60 includes a second sequence of messages 61, 62, 63, 64', 65. The message 64' does not delete the map object that still references the node or way deleted according to message 51. Thus, in this case, the processing system 20 determines that the integrity issue identified by processing message 51 is not indicated to have been resolved by any of the messages received within the time period 99.

It will be appreciated that an integrity issue determined to exist based on a message 51 in a stream 50 of the several streams 50, 60 can also be determined as being resolved based on another message in the same stream 50. For illustration, if message 52 or message 53 indicates that the map object deleted according to message 51 was added again, the processing system 20 is operative to determine that messages received within the time period 99 after detection of the integrity issue resolve this integrity issue.

The processing system 20 may, thus, be operative to employ a window-based processing technique in which a time window (indicated by a time period 99 in Figure 8 and Figure 9) is used to monitor messages for potential resolutions of a detected integrity issue. The information from a message (such as message 51) determined to give rise to an integrity issue may be temporarily stored for ascertaining whether the integrity issue can be determined, based on messages received within the time period 99 after detection of the integrity issue, to have been resolved. Temporarily storing the information from the message (such as message 51) determined to give rise to an integrity issue is also useful for retrieving this information for generation of an output message in an output stream of output 49, in particular after ascertaining that the integrity issue can be determined, based on messages received within the time period 99 after detection of the integrity issue, to have been resolved.

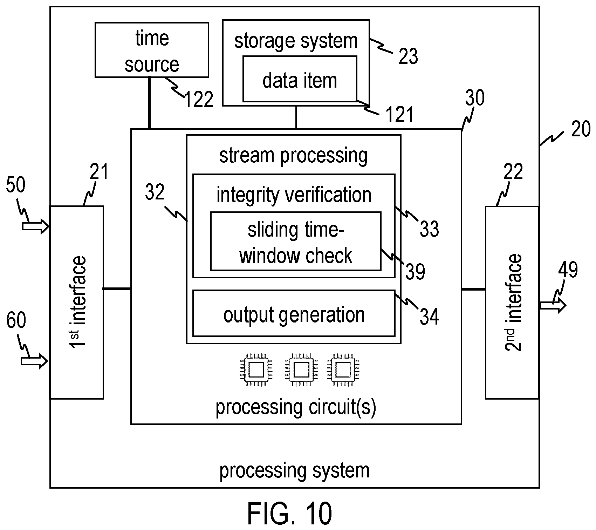

Figure 10 shows a schematic representation of the processing system 20 operative to determine, responsive to detection of an integrity issue, whether messages received within a time period 99 after detection of the integrity issue show that the integrity issue has already been dealt with.

The stream processing 32 is operative to store a data item 121 in the storage system 23 responsive to detection of the integrity issue. The data item 121 includes information, such as payload data and/or other information, that is based on the message determined to be associated with the integrity issue.

By storing the data item 121 in the storage system 23, the stream processing 32 temporarily removes the respective message from the ordinary stream processing a flow, which may operate, for example, in a sequential one-by-one processing of messages as they are being received. As mentioned above, the data item 121 may be used for various purposes, such as determining whether messages received within the time period 99 after detection of the integrity issue indicate that the integrity issue has already been addressed in the map layers. Alternatively or additionally, the data item 121 may be used for generating, at a later time and after ascertaining that the integrity issue has been addressed, an output message for inclusion in an output stream of the output 49.

The stream processing 32 is operative to perform a sliding time window check 39. The sliding time window check 39 is operative to analyze, responsive to detection of an integrity issue, messages received within the time period 99 of the detection of the integrity issue with regard to whether any of the messages indicates that the integrity issue has already been resolved.

The sliding time window check 39 may use time information obtained from a time source 122 of the processing system 20 or coupled to the processing system 20. The time source 122 may also be an integral time source of the at least one processing circuit 30.

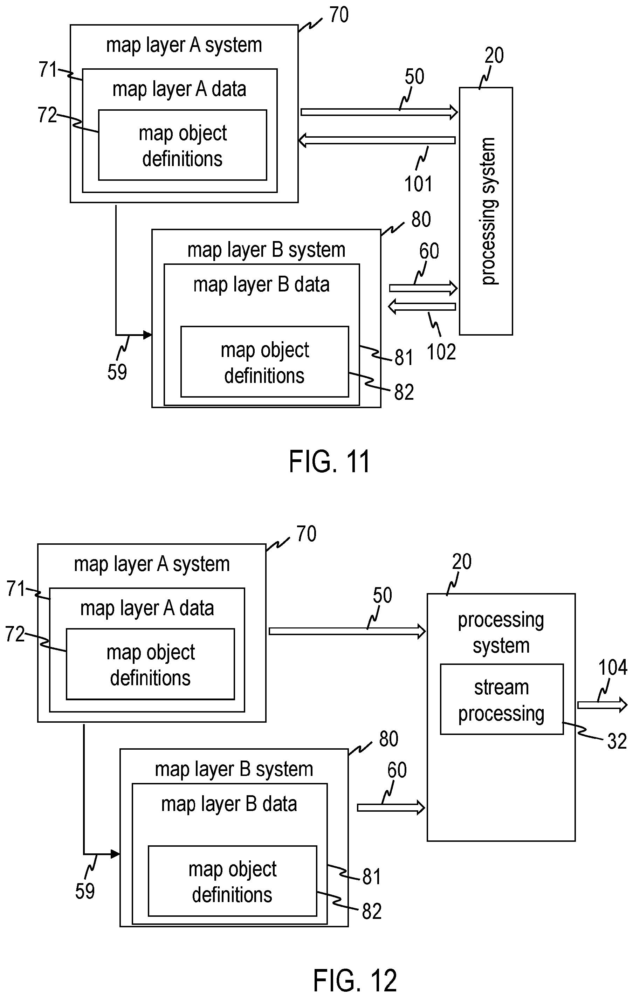

The output generated based on the integrity verification may have various forms, as will be explained with reference to Figure 11, Figure 12, Figure 13, Figure 14, and Figure 15.

Figure 11 shows a system comprising several map layer provision system 70, 80 and the processing system 20. The processing system 20 is operative to generate, based on a result of the integrity verification, output comprising feedback 101 and/or feedback 102 for provision to one or several of the map layer provision systems 70, 80. The feedback 101 and/or the feedback 102 may be provided to, responsive to detection of an integrity issue, to one or several map layer provision systems that are involved in the integrity issue. For illustration, if an integrity issue is caused by a deletion of a map object definition from the map object definitions 72 of a map layer provision system 70, with this map object being still referenced by another map object definition in the map object definitions 82 of another map layer provision system 80, the processing system 20 may be operative to generate feedback 102 for provision to the other map layer provision system 80 to indicate which of the map object definitions 82 includes a reference to a no longer existing object. Alternatively or additionally, the processing system 20 may be operative to generate feedback 101 for provision to the map layer provision system 70 to indicate that deletion of the map object creates an integrity issue. Alternatively or additionally, if an integrity issue is caused by addition or change of a map object definition that references another object that does not exist or that there is no longer exist, the processing system 20 may be operative to provide feedback to the map layer provision system in which the additional change has been made.

Figure 12 shows a system comprising several map layer provision system 70, 80 and the processing system 20. The processing system 20 is operative to generate, based on a result of the integrity verification, output comprising an output stream 104. The output stream 104 may comprise a sequence of output messages. The output stream 104 may be provided to a map data provision system and/or a map data consumer. The sequence of output messages in the output stream 104 may comprise messages that include information aggregated from at least two different streams 50, 60 received and processed by the stream processing 32. The sequence of output messages in the output stream 104 may comprise other messages that include information taken from only one of the several streams 50, 60. The latter case may happen when a message in a stream 50 or 60 indicates a modification of a map object definition, but no other message in the received several streams relates to the same object.

By generating the output stream 104 using stream processing 32, good map data freshness can be attained as compared to, e.g., batch processing techniques.

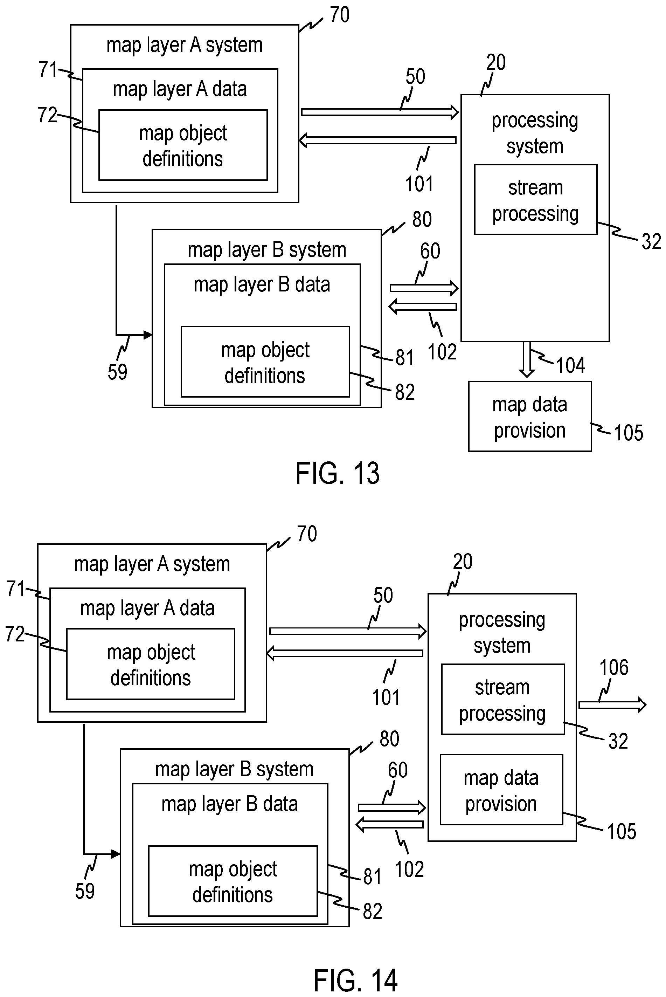

Figure 13 shows a system comprising several map layer provision system 70, 80 and the processing system 20. The processing system 20 is operative to generate, based on a result of the integrity verification, output comprising an output stream 104 and feedback 101, 102 for provision to the map layer provision systems 70, 80.

The output stream 104 may be provided to a map data provision system 105, which may be communicatively interfaced with or integral with the processing system 20. The map data provision system 105 may be operative to provide map data based on the output stream 104 to one or several map data consumers, such as vehicle systems, smartphones, and/or other map data consumers for use in performing a map data-based function. The map data provision system 105 may also perform post-processing functions such as filtering, quality assurance, and/or other post-processing functions of the output stream 104.

Figure 14 shows a system comprising several map layer provision system 70, 80 and the processing system 20. The processing system 20 is operative to generate, based on a result of the integrity verification, output comprising feedback 101, 102 for provision to the map layer provision systems 70, 80 and an output stream 106. The output stream 106 may be generated by post-processing, by a map data provision system, an output stream of the stream processing 32. The post-processing may include functions such as filtering, quality assurance, and/or other post-processing functions of the output stream of the stream processing 32.

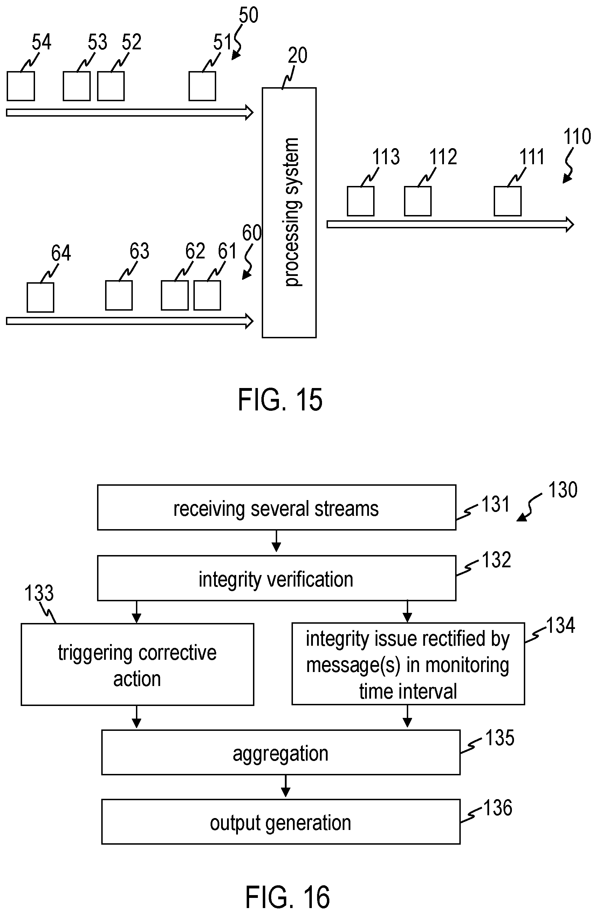

Figure 15 illustrates an output stream 110, which may be the output stream 104 and/or the output stream 106. The output stream 110 comprises a plurality of output messages 111, 112, 113. A relative timing of the output messages may be different from a relative timing of messages in each of the several streams 50, 60 received and processed by the processing system 20. For illustration, a time delay between successive ones of the output messages 111, 112, 130 may vary as a function of time and may be different from a time delay between successive ones of messages in each of the several streams 50, 60.

By virtue of the stream processing, the processing system 20 is operative to generate and, optionally, output an output message 111 based on at least one message of the several streams 50, 60, at a time at which successive messages of the several streams 50, 60 may not even have been received by the processing system 20.

Figure 16 is a flow chart of a method 130. The method 130 may be performed automatically by the processing system 20.

At process block 131, the processing system 20 receives the several streams 50, 60.

At process block 132, the processing system 20 performs an integrity verification. The integrity verification may comprise a referential integrity verification. The integrity verification may alternatively or additionally comprise a logical integrity verification and/or a syntactical integrity verification.

At process block 133, responsive to detecting an integrity issue, the processing system 20 may trigger a corrective action. Alternatively, at process block 134, and responsive to detecting an integrity issue, the processing system 20 may determine that one or several messages received in a time period 99 of the detection of the integrity issue indicate that the integrity issue has already been addressed by additional modifications in the map layers. Process block 133 may also be omitted. When present, process block 133 is useful to reduce the rate of occurrence of referential integrity issues.

At process block 135, the processing system 20 may aggregate information from different messages included in the several streams 50, 60 to generate at least some output messages of the output stream of the stream processing. Information from messages included in the several streams 50, 60 may be aggregated when they relate to a same map object, e.g., when one of the messages defines a modification of the map object definition of the map object itself and a different one of the messages relates to a further map object that references this map object.

At process block 136, the output is generated. The output may comprise at least some of output messages that include information aggregated from several messages included in the several streams.

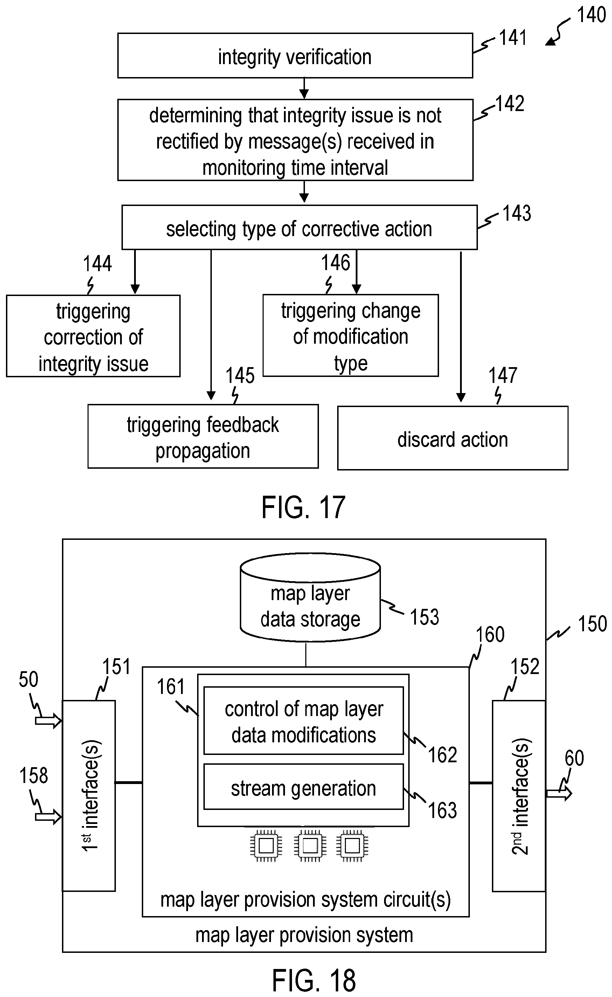

Figure 17 is a flow chart of a method 140. The method 140 may be performed automatically by the processing system 20.

At processing block 141, the processing system 20 performs the integrity verification. Processing block 141 may be implemented as previously described.

At process block 142, the processing system 20 determines that messages received within a time interval 99 of the detection of an integrity issue do not allow the processing system 20 to ascertain that the integrity issue is already been resolved in the map layers.

At process block 143, the processing system 20 may optionally select a type of corrective action to be performed. The selection of the type of corrective action may depend on the type of integrity issue identified in the integrity verification at process block 141. For illustration, the type of corrective action may depend on whether the integrity issue is a referential integrity issue, or another type of integrity issue.

Depending on the type of corrective action selected at process block 143, the processing system 20 may be operative to trigger, at process block 144, a correction of the integrity issue. Triggering the correction of the integrity issue may comprise triggering correction of a map object definition that references another map object that is no longer existent.

Alternatively or additionally, the processing system 20 may be operative to trigger, at process block 145, a provision of feedback to one or several map layer provision systems involved in the detected integrity issue. The provision of feedback may be performed so as to allow the one or several map layer provision systems to correct, potentially using communication over the at least one communication link 59 between map layer provision systems, the integrity issue.

Alternatively or additionally, the processing system 20 may be operative to trigger, at process block 146, a change of a modification type that has led to the detected integrity issue. For illustration, if the processing system 20 determines, based on a message included in the several streams, that a modification of map layer data includes creation of a duplicate of an already existing map object, the processing system 20 may cause the map layer provision system to change the modification from a creation to a change of the already existing map object.

Alternatively or additionally, the processing system 20 may be operative to perform, at process block 147, a discard operation. For illustration, if the processing system 20 determines, based on a message included in the several streams, that there is a duplicate of an object creation, a duplicate of an object deletion, or an update of a non-existing object, this processing system 20 may discard this.

Figure 18 is a schematic representation of a map layer provision system 150 operative to provide a stream 60 comprising a sequence of messages, each associated with a modification of a map object definition in a map layer with which the map layer provision system 150 is associated..

The map layer provision system 150 comprises or is coupled to a map layer storage 153. The map layer storage 153 has stored therein map layer data comprising map object definitions for at least one map layer.

The map layer provision system 150 comprises at least one interface 151, 152. The map layer provision system 150 is operative to receive, via the at least one interface 151, 152, a stream 50 generated by another map layer provision system and/or other data 158 such as version data.

The map layer provision system 150 comprises at least one map layer provision system circuit 160 operative to perform map layer related functions 161. The at least one map layer provision system circuit 160 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

The map layer provision system circuit 160 may be operative to perform a control 162 of map layer data modifications. The map layer provision system circuit 160 may be operative to retrieve data from the map layer data storage 153 and/or write into the map layer data storage 153 to at least one of: add a new map object definition, change an existing map object definition, delete an existing map object definition. The control 162 may be operative to perform the map layer data modification based on new observations as they become available (e.g., based on observations of road blockages observed from vehicle location traces and/or based on observations of new restrictions collected using vehicular sensor systems). Previous versions of the map layer data may be retained in the process, causing several versioned variants of the map layer data to be stored in the map layer data storage 153.

The control 162 may also be operative to perform the map layer data modification responsive to messages included in a stream 50 received from another map layer provision system, which other map layer provision system defines map objects referenced by map layer object definitions in the map layer data storage 153. In the latter case, while the modification of the map layer object definition in the map layer data storage 153 is initiated by receipt of a message from another map layer provision system, it is not required for the map layer provision system 150 and the other map layer provision system (such as map layer provision system associated with a child or parent layer of the map layer handled by the map layer provision system 150) to align a timing at which the modifications are respectively made.

The map layer provision system circuit 160 is also operative to perform a stream generation 163. The stream generation 163 may be operative such that, responsive to a modification of a map object definition in the map layer data storage 153, the map layer provision system 150 generates a message of a stream 60 output by the map layer provision system 150 for provision to the processing system 20 (and, optionally, other map layer provision system(s)).

The stream generation 163 is operative such that a message of the stream 60 may be generated and output, as part of the stream 60, at a timing that is not synchronized with a timing at which messages in, e.g., the stream 50 are received by the map layer provision system 150. The stream generation 163 may be operative such that a time delay between successive messages of the stream 60 may be variable. This allows new messages to be output in the stream 60 with a timing that reflects the timing at which modifications are made to the map object definitions in the map layer data storage 153.

The map layer provision system 150 may be operative to receive and process feedback from the processing system 20, such as feedback 101 or feedback 102

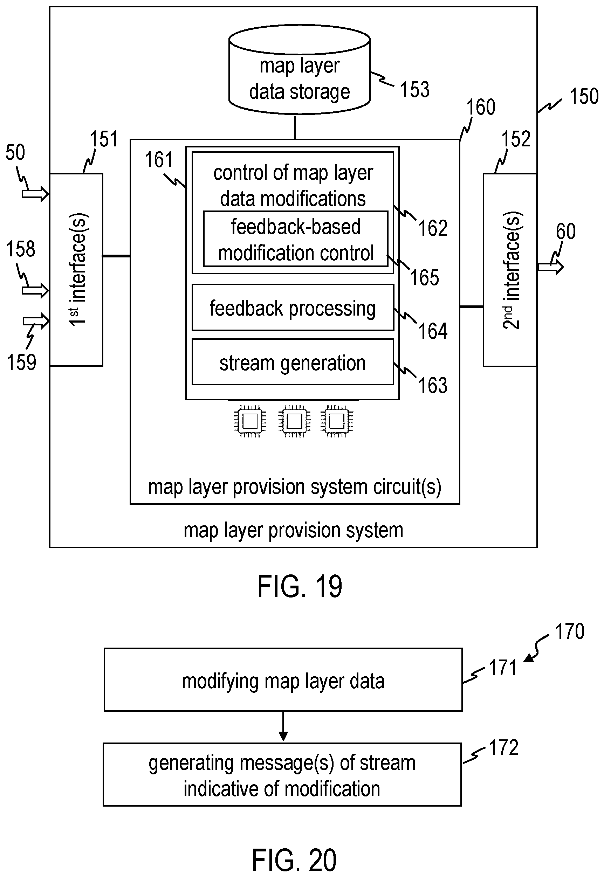

Figure 19 is a schematic representation of the map layer provision system 150. The at least one interface 151, 152 is operative to receive feedback 159 from the processing system 20. The control 162 comprises a fleet bag based modification controller 165, which modifies map object definitions in the map layer data storage one hundred 53 responsive to the feedback received from the processing system 20. The at least one map layer system processing circuit or hundred 60 is operative to perform a feedback processing 164 to determine, based on the received feedback and, optionally, based on the stream 50, which modifications are to be made to the map object definitions in the map layer data storage one hundred 53 to resolve a reported integrity issue.

The modification, also when performed in a feedback-initiated manner, causes a message to be generated and output in the stream 60, thereby allowing the processing system 20 to determine that a detected integrity issue is been resolved.

Figure 20 is a flow chart of a method 170. The method 170 may be performed automatically by the map layer provision system 150.

At process block 171, the map layer provision system 150 modifies at least one map object definition in the map layer data storage. The modification may comprise an addition of a new map object definition, a change of an existing map object definition, a deletion of an existing map object definition. The modification may be based on new information (e.g., new observations acquired using sensors of vehicles) related to the respective map layer. The modification may be caused to be made responsive to a message in a stream received from another map layer, such as a parent layer that defines map objects referenced by map object definitions in the map layer handled by the map layer provision system 150.

At process block 172, the map layer provision system 150 generates a message of the stream 60 which is indicative of the modification made. The message may also include version information.

The generation of messages of the stream 60 at process block 172 may be performed such that a message of the stream 60 may be generated and output, as part of the stream 60, with a timing that is not synchronized with a timing at which messages in, e.g., the stream 50 are received by the map layer provision system 150. The generation of messages of the stream 60 may be performed such that a time delay between successive messages of the stream 60 may be variable. This allows new messages to be output in the stream 60 with a timing that reflects the timing at which modifications are made to the map object definitions in the map layer data storage 153.

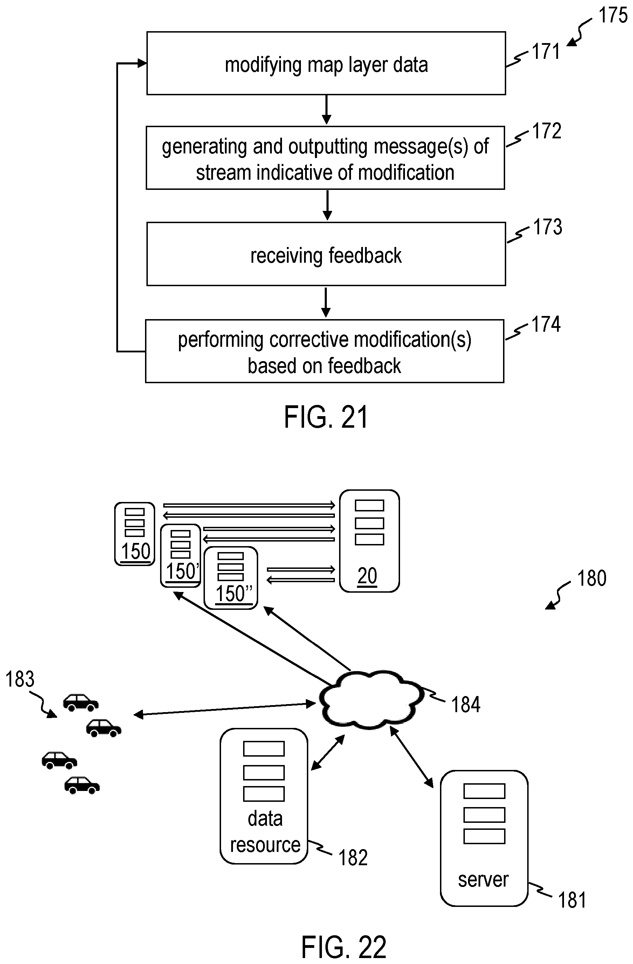

Figure 21 is a flow chart of a method 175. The method 175 may be performed automatically by the map layer provision system 150. Process blocks 171, 172 may be implemented as described with reference to Figure 20.

At process block 173, the map layer provision system 150 receives feedback from the processing system 20. The feedback may be indicative of an integrity issue identified by the integrity verification by the processing system 20.

At process block 174, the map layer provision system 150 performs a corrective modification based on the feedback. The corrective modification of at least one map object definition is performed in such a way that the integrity issue identified by the integrity verification of the processing system 20 and indicated in the received feedback is rectified. The map layer provision system 150 generates and outputs a message in the stream 60 also for the corrective modification.

As previously mentioned, modifications in map layer data by way of adding, changing, or deleting map object definitions, may be performed so as to improve agreement between the map layer and the physical world reality in which the map data is used for performing map-based functions.

Figure 22 is a schematic representation of a system 180 which comprises the processing system 20 and several map layer provision systems 150, 150', 150". Each of the several map layer provision systems may be operative as disclosed in association with Figure 18 and Figure 19.

The several map layer provision systems 150, 150', 150" may be operative to respectively modify map object definitions in the respective map layer responsive to information that may be captured using sensors of several vehicles 183 communicatively coupled to at least one of the map layer provisions systems 150, 150', 150" via communication links which may be provided by a communication network 184 (which may include a wide area network and/or a cellular network). For illustration, restrictions (such as blocked passages) may be identified by a map layer provision system for a restrictions layer, based on probe traces of vehicles 183, and may be used to update the restriction for the respective way.

Alternatively or additionally, at least some of the several map layer provision systems 150, 150', 150" may be operative to respectively modify map object definitions in the respective map layer based on data obtainable from data resources 182 and/or servers 181 with which the map layer provision systems are coupled via communication links provided by the communication network 184.

The various map layers may include, without limitation, a base map layer; a turn restrictions layer; a speed limits layer; a speed profile layer; a one way layer; a blocked passages layer; a buildings layer; an address points layer; a points of interest layer; a parking information layer; a point of interest layer.

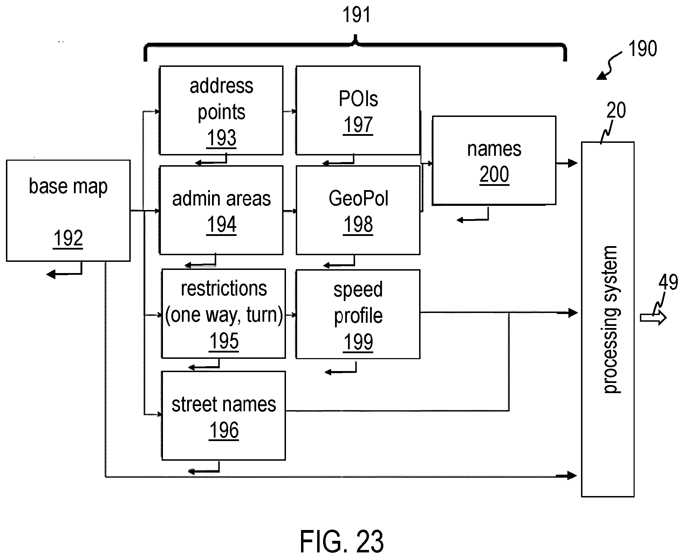

Figure 23 shows an acyclic graph of map layers 190. The acyclic graph may, but does not need to have a hierarchical structure. The acyclic graph of map layers may comprise a base map layer 192 including map object definitions for nodes and ways. The acyclic graph of map layers may comprise additional map layers 191 such as an address point layer 193, which is a child layer of the base map layer 192 and which may be a parent layer of a points of interest layer 197. The acyclic graph of map layers may comprise the points of interest layer 197, which may be a child layer of the address points layer 193 and a second generation child layer of the base map layer 192. The acyclic graph of map layers may comprise an administrative areas layer 194 which may be a child layer of the base map layer 192 and which may be a parent layer of a geopolitical layer 198. The acyclic graph of map layers may comprise the geopolitical layer 198, which may be a child layer of the administrative areas layer 194 and a second generation child layer of the base map layer 192. The acyclic graph 190 may comprise additional layers such as one or several restriction layers 195 (such as layer(s) for speed restrictions, turning restrictions, blocked passages), a speed profile layer 199 , a street names layer 196, and a names layer 200. Map layer provision systems for the various layers provide several streams indicative of modifications made to the respective layers. The streams are processed by the processing system 20 using stream processing to generate output 49 comprising an output stream. The streams may also be processed by the other map layer provision systems.

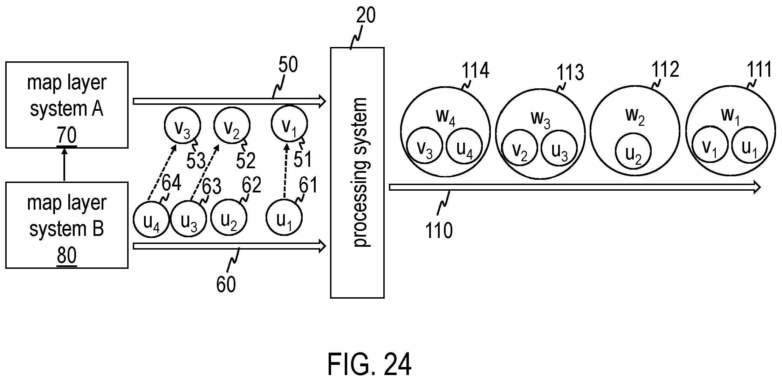

With reference to Figure 24, Figure 25, Figure 26, Figure 27, Figure 28, and Figure 29, the operation of the map layer provision systems and/or the processing system 20 will be illustrated further.

As previously noted, the processing system 20 may be operative to generate an output stream 110 which includes at least some output messages that each aggregate information from several messages of the several streams received by the processing system 20.

Figure 24 illustrates a stream 50 including messages 51, 52, 53 defining various modifications of map layer object definitions in a map layer A. Stream 60 includes messages 61, 62, 63, 64 defining various other modifications of other map layer object definitions in a map layer B. As schematically illustrated by the broken connecting lines, message 61 relates to a modification of a map object definition that references a map object modified in a manner defined by message 51. Message 63 relates to a modification of a map object definition that references a map object modified in a manner defined by message 52. Message 64 relates to a modification of a map object definition that references a map object modified in a manner defined by message 53. Message 62 relates to a modification of a map object definition that does not reference any map object to which messages in the stream 50 relate.

The processing system 20 is operative to generate output messages 111, 112, 113, 114. Output message 111 aggregates information from messages 51, 61. Output message 112 includes information from message 62 (without any aggregation). Output message 113 aggregates information from messages 62, 63. Output message 114 aggregates information from messages 53, 64.

Thus, the processing system 20 is operative to perform a stream processing in which messages from the several streams are aggregated into an output message if one of the messages relates to a map object referenced by a map object definition modified as indicated by another one of the messages. If there is no related message, no aggregation need be performed.

If the integrity verification performed in the stream processing detects an integrity issue, the generation of an output message may be delayed until it can be ascertained that the integrity issue has been addressed. Thus, the order of output messages in the output stream 110 may be different from the order at which the information elements used for generating the output messages are received by the processing system 20.

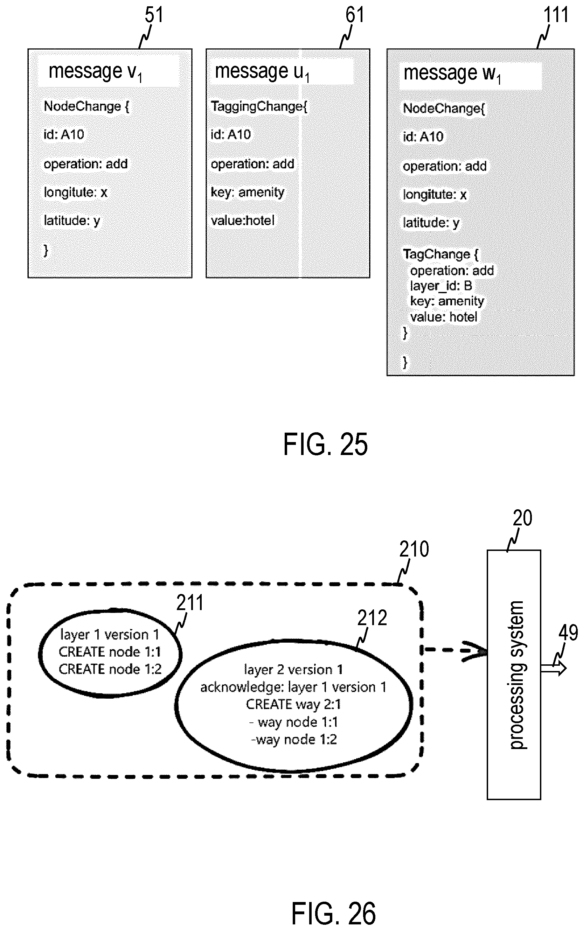

Figure 25 shows a specific example of messages 51, 61, 111. Message 51 defines addition of a node at coordinates x and y in a map layer (such as a base map layer). Message 61 adds, in a different map layer (such as a points of interest layer) a map object definition of a hotel at the respective node. The processing system 20 is operative to generate an output message 111, in the output stream 110, which aggregates the identifier for the node, its coordinates (as specified by the base map layer message 51) and its POI information (as specified by the POI layer).

Integrity issues, such as a referential integrity issues and/or logical or syntactical integrity issues, can be identified by the processing system 20. Various examples are provided with reference to Figure 26, Figure 27, Figure 28, and Figure 29.

Figure 26 illustrates modifications 210 and including a modification 211 performed in a map layer and another modification 212 performed in another map layer. Modification 211 creates two new nodes referred to as "1:1" and "1:2". The other modification 212 created, in the other map layer, a way that includes the nodes "1:1" and "1:2" as nodes of the way. The processing system 20 determines that there is no referential integrity issue. The processing system 20 generates an output message of an output stream of the output 49, which output message can aggregate the information on the modifications 211, 212.

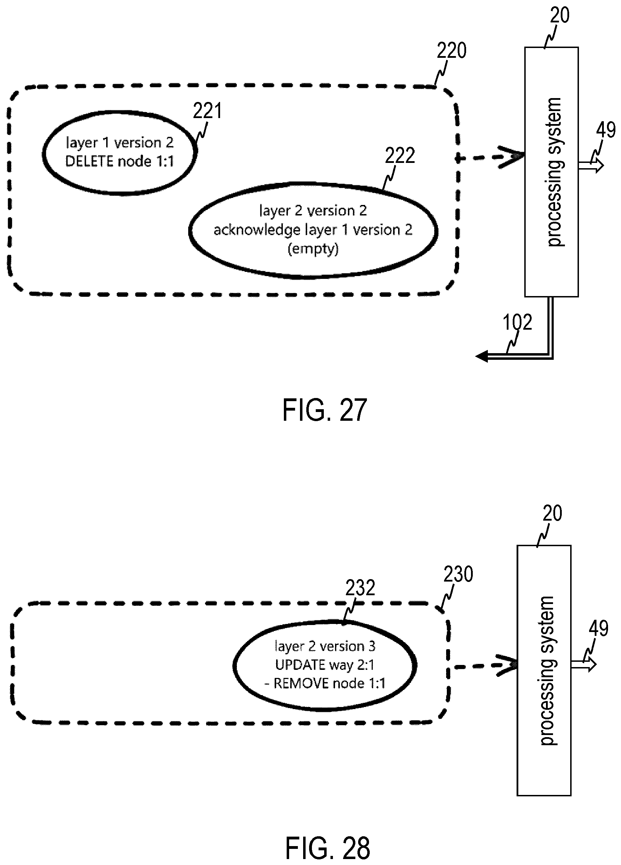

Figure 27 represents a continuation from this state and illustrates modifications 220 in which node 1:1 (created at modification 211) is deleted by modification 221. The other map layer provides an acknowledgment 222. The processing system 20 determines that there is an inconsistency because the way previously created by modification 212 now includes a reference to a no longer existing node. Responsive to detection of this integrity issue, based on the received several streams, the processing system 20 generates feedback 102 to trigger a corrective action. At this stage, no new output message of the output stream in output 49 is generated to include the deletion defined by modification 221, due to the existing referential integrity issue.

Figure 28 represents a continuation from this state and illustrates modifications 230 in which the map object definition of the way "2:1" (created at modification 212) is changed by a modification 232 removing node 1:1 therefrom. The change triggers generation of a message in a stream to the processing system 20. The processing system 20 determines that the referential integrity issue is resolved. The processing system 20 generates a new output message of the output stream in output 49 to reflect the change in the definition of way "2:1" (defined by modification 232) and the deletion of node "1:1" (defined by modification 221).

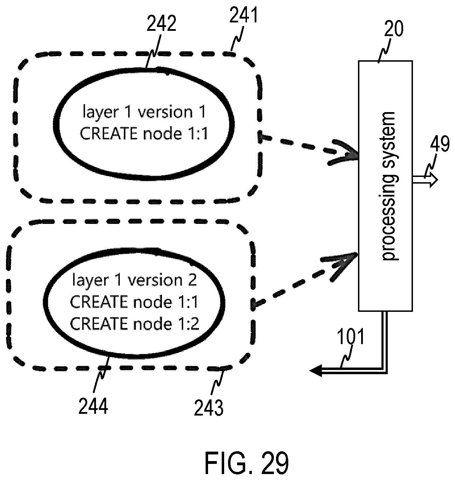

Figure 29 represents a further example in which, a "version 1" of a map layer (such as a base map layer) includes modifications 241 including a modification 242 that creates a node "1:1". A "version 2" of the map layer includes modifications 243 including a modification 244 that creates the already existing node "1:1" and that creates a different node "1:2". The stream provided by the respective map layer system to the processing system 20 is processed, using stream processing, by the processing system 20. The processing system 20 detects the creation, by modification 244, of a map object definition of an already existing map object. This causes the processing system 20 to provide feedback 101 to trigger a corrective action.

As already explained with reference to Figure 10, the processing system 20 may be operative to alter the processing of received messages selectively based on a result of the integrity verification.

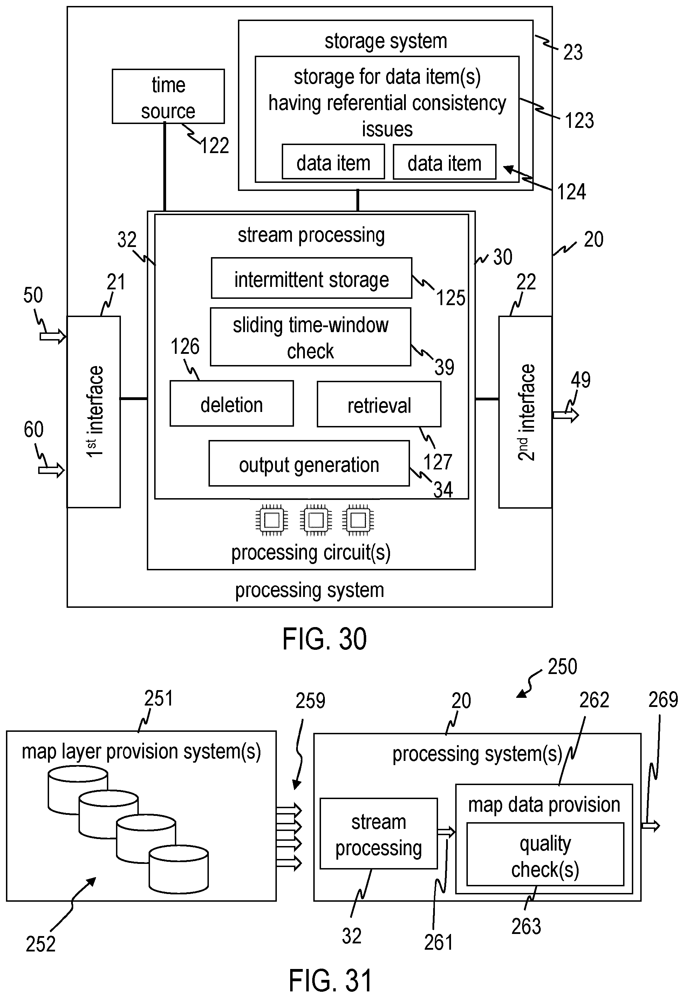

Figure 30 shows a schematic representation of the processing system 20 to further explain this operation. The storage system 23 is operative to store, in a storage 123 for data item(s) having referential and/or other integrity issues, one or several data items 124. Each of the data items 124 includes information from a message determined to reflect a modification in a map layer which causes a referential integrity issue, and/or possibly a syntactical and/or logical integrity issue. Referring to Figure 25, the data items may include, for example, the payload of the message determined to reflect a modification which causes the integrity issue.

As new messages of the several streams 50, 60 are received, the stream processing 32 is operative to perform a retrieval 127 of the data items 124 to check whether the integrity issue has been resolved and, if so, to use the data item that no longer has the integrity issue for generating an output message of an output stream of the output 49.

The processing system 20 may be operative such that the stream processing 32 also comprises a deletion 126 of data items 124 from the storage 123. The deletion 126 may be performed once it is ascertained that the integrity issue no longer exists. The deletion 126 may also be performed based on a time-based deletion criterion. For illustration, a time at which a data item 124 is stored may be recorded and used to select data items 124 for deletion, based on whether a threshold storage time has been reached or exceeded.

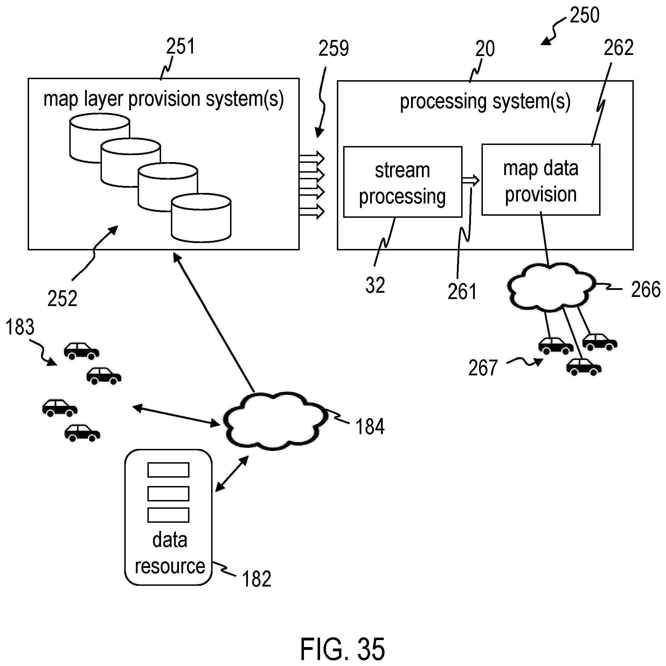

With reference to Figure 31, Figure 32, figure 33, Figure 34, in Figure 35, systems 250 that comprises the processing system 250 and one or several map layer provision systems 251 operative to modify map layer data 252 for one or several map layers will be described.

The one or several map layer provision systems 251 are operative to output a plurality of streams 259. The processing system 20 is operative to receive the plurality of streams 259 and to perform the stream processing 32, which comprises the integrity verification. The processing system 20 may also be operative to perform additional downstream processing operations on an output 261 of the stream processing 32. For illustration, a map data provision 262 may be operative to perform quality checks terminal 263 on the output 261 of the stream processing and to generate map dated hundred 69 for distribution to map data consumers.

The stream processing and, if present, the map data provision may be implemented several times to allow several different map products to be generated. The several different map products may be distinguished from each other in, e.g., the information included therein. The several different map products may alternatively or additionally be distinguished from each other in, e.g., the weight given to various KPIs, such as freshness v. accuracy or coverage. Freshness v. accuracy or coverage may be traded against each other to a certain degree by controlling operation parameters of the stream processing. For illustration, an increase in the time interval 99 in which monitoring is performed after detection of an integrity issues may increase coverage (by reducing the risk that information on a modification that causes an integrity issue must be discarded when generating the output 261 of the stream processing), at the expense of freshness. Vice versa, a decrease in the time interval 99 in which monitoring is performed after detection of an integrity issues may reduce coverage (by increasing the risk that information on a modification that causes an integrity issue must be discarded when generating the output 261 of the stream processing), while increasing freshness.

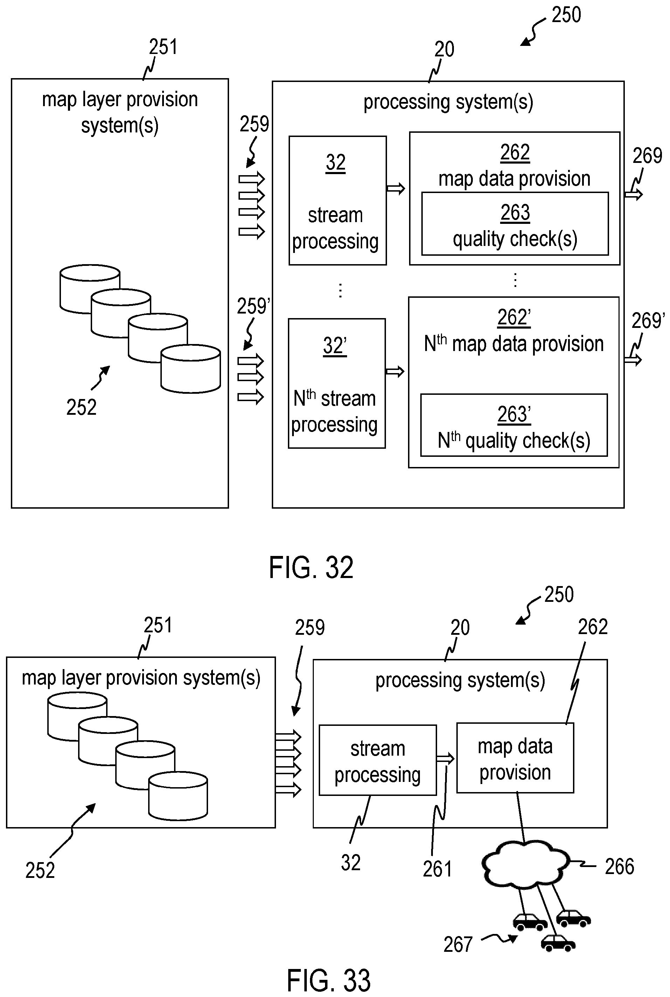

Figure 32 shows the system 250 in which the processing system 20 performs a stream processing 32 to generate map data 269 of a first map product, and performs one or several additional instances of stream processing 32' (respectively including the integrity verification) to generate map data 269' of one or several additional map products. The output 269 may be distinguished, with regard to timing of the output messages in the output stream of the output 269, from the output 269'.

Optionally, and as also schematically illustrated in Figure 32, different instances of the stream processing may receive different several streams 259, 259' as input. For illustration, for generating map data 269', the map layers considered need not be completely identical to those used for generating map data 269.

Figure 33 shows a schematic representation of the system 250 which comprises the one or several map layer provision systems 251, the processing system 20, and one or several map data consumers 267. The one or several map data consumers 267 may be operative to receive map data based on the output stream 261 of the stream processing 32 to perform at least one map-based function based thereon. The one or several map data consumers 267 may be operative to receive the map data as a stream of map data via communication links, which may be realized using a communication network 266. The communication network 266 may comprise a wide area network and/or a cellular network.

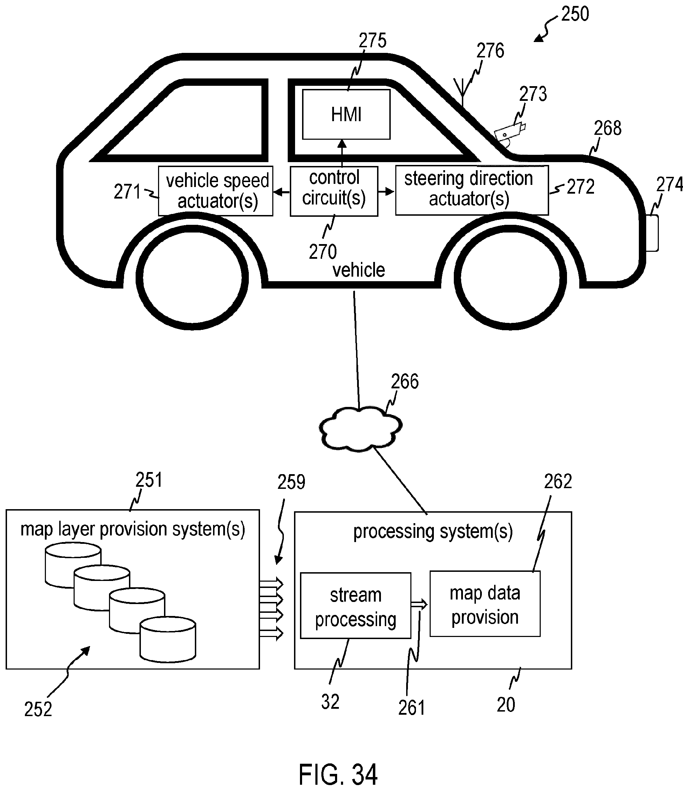

Figure 34 shows a schematic representation of the system 250 which comprises the one or several map layer provision systems 251, the processing system 20, and a map data consumer 268. The map data consumer 268 comprises at least one control circuit 270. The at least one control circuit 270 may be communicatively coupled with a communication interface 276 of the map data consumer 268. The at least one control circuit 270 may be operative to perform a map-based function based on the map data that is based on the output stream 261 of the stream processing. The at least one control circuit 270 may be operative to perform at least one control action, based at least on the map data, to control one or several actuators 271, 272 and/or a human machine interface 275. The at least one control circuit 270 may be operative to use the map data in combination with sensor data captured using one or several sensors, such as a distance sensor 274 and/or a camera 273, to perform the at least one control operation.

Figure 35 shows a schematic representation of the system 250 which comprises the one or several map layer provision systems 251, the processing system 20, and a systems 182, 183 from which the one or several map layer provision systems 251 obtain data based upon which modifications of map object definitions are performed. The systems 182, 183 may comprise a vehicle fleet 183 that provides sensor data to the map layer provision system(s) 251 and/or other data resources 182 communicatively coupled to the map layer provision system(s) 251. The system 250 also comprises one or several map data consumers 267. The map data consumers 267 may comprise at least one map data consumer operative as described in association with Figure 34.

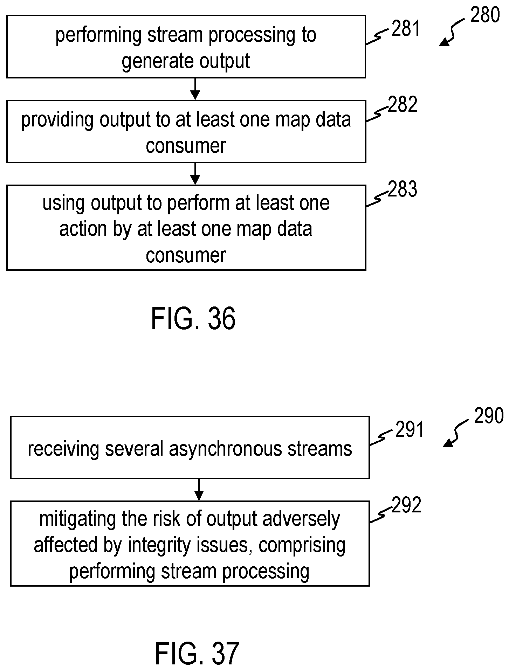

Figure 36 is a flow chart of a method 280. The method 280 may be performed automatically using the processing system 20 and at least one map data consumer, such as map data consumer 268.

At process block 281, the processing system 20 performs stream processing of several streams. Each of the several streams comprises messages indicative of modifications to a map layer with which the respective stream is associated. The several streams may be asynchronous.

At process block 282, output is provided by the processing system 20 to at least one map data consumer. The output is based on the stream processing. The output may comprise a stream of map data.

At process block 283, the map data consumer performs at least one action based at least on the output of the stream processing. The at least one action may comprise a control action. The at least one action may be any one or any combination of a route search, a navigation function, a driver assistance function, an advanced driver assistance function, an autonomous driving function. The at least one action may comprise at least one control action. The at least one control action may comprise controlling at least one actuator and/or controlling a human machine interface.

Figure 37 is a flow chart of a method 290. The method 290 may be performed automatically using the processing system 20.

At process block 291, the processing system 20 receives several asynchronous streams.

At process block 292, the processing system 20 mitigates the risk of an output of a stream processing of the several asynchronous streams being adversely affected by an integrity issue. This comprises performing the stream processing including an integrity verification, as discussed in detail herein.

While embodiments have been described with reference to the drawings, modifications and alterations may be implemented in other embodiments. While exemplary use cases in which the methods and vehicle processing system can be applied have been described in detail, the techniques disclosed herein may be used in association with a variety of additional scenarios. For further illustration, while exemplary map layers have been described, the techniques disclosed herein are generally applicable to a wide variety of map layers.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the scope of the claims. In some instances, well-known circuits, structures and techniques have not been shown in detail in order not to obscure the invention. Thus, it will be understood that changes and modifications may be made by those of ordinary skill within the scope of the following claims.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method of modifying map data, the method comprising:
obtaining, by a processing system (20), several streams (50, 60; 259; 259, 259'), wherein:
each of the several streams (50, 60; 259; 259, 259') comprises data indicative of modifications of one of several map layers (71, 72; 192-200) with which the stream is associated; and
the several map layers (71, 72; 192-200) comprise a child layer (81; 193-200) and one or several parent layers (71; 192-195, 197, 198), wherein the several map layers (71, 72; 192-200) comprise map object definitions (72, 82), wherein the map object definitions (72, 82) comprise parent layer map object definitions (72) in the one or several parent layers (71; 192-195, 197, 198) and child layer map object definitions (82) in the child layer (81; 193-200), wherein the child layer map object definitions (82) include references (84, 86) to parent layer map objects defined by the parent layer map object definitions (72), and
performing, by the processing system (20), a stream processing (32) of the several streams (50, 60; 259; 259, 259'), comprising:
an integrity verification (33) to verify integrity of the child layer map object definitions (82) modified as indicated by a stream of the several streams (50, 60; 259; 259, 259') that is associated with the child layer (81; 193-200) and of the parent layer map object definitions (72) modified as indicated by at least another one of the several streams (50, 60; 259; 259, 259') that is associated with the one or several parent layers (71; 192-195, 197, 198); and
generating output (49; 101, 102; 104; 106; 110) based at least on a result of the integrity verification (33).

2. The method of claim 1, wherein the stream of the several streams (50, 60; 259; 259, 259') that is associated with the child layer (81; 193-200) comprises a first sequence of messages (61-65), wherein the at least another one of the several streams (50, 60; 259; 259, 259') that is associated with the one or several parent layers (71; 192-195, 197, 198) comprises a second sequence of messages (51-54), wherein a message timing of the first sequence of messages (61-65) is independent of a message timing of the second sequence of messages (51-54).

3. The method of any one of the preceding claims, wherein the stream processing (32) further comprises:
triggering a corrective action responsive to detection of an inconsistency in the integrity verification (33).

4. The method of claim 3, wherein the stream processing (32) further comprises:
storing, responsive to detection of the inconsistency, a data item (121; 124) that provides information on at least one child layer map object definition that is not consistent with the parent layer map object definitions (72, 82), the data item (121; 124) being stored at least temporarily after detection of the inconsistency.

5. The method of claim 4, wherein the stream processing (32) further comprises:
monitoring, responsive to detection of the inconsistency, the several streams (50, 60; 259; 259, 259') prior to triggering the corrective action, wherein monitoring the several streams (50, 60; 259; 259, 259') comprises ascertaining, based on the data item (121; 124), that the detected inconsistency remains unaddressed by the modifications indicated by the several streams (50, 60; 259; 259, 259') in a monitoring time interval (99) after detecting the inconsistency.

6. The method of any one of claims 3 to 5, wherein the corrective action comprises one, several, or all of:
correcting an incorrect reference to at least one of the parent layer map objects in at least one of the child layer map object definitions (72, 82) based at least on the inconsistency;
propagating feedback to map layer provision systems of the several map layers (71, 72; 192-200) based at least on the inconsistency;
changing a type of at least one of the modifications from a first type of modification to a second type of modification, wherein the at least one of the modifications is a root cause of the inconsistency, and wherein changing the type resolves the inconsistency;
discarding a duplicate of a map object creation, a duplicate of a map object deletion, and/or a modification of a non-existing map object.

7. The method of any one of the preceding claims, wherein generating the output (49; 101, 102; 104; 106; 110) comprises aggregating at least two modifications of map object definitions (72, 82) relating to a same map object into an aggregate modification, wherein the output (49; 101, 102; 104; 106; 110) is based at least on the aggregate modification, wherein the aggregating is performed based at least on a result of the integrity verification (33).

8. The method of any one of the preceding claims, wherein the integrity verification (33) comprises a referential integrity verification (33) that checks that modifications of the child layer map object definitions (72, 82) as indicated by the stream of the several streams (50, 60; 259; 259, 259') that is associated with the child layer (81; 193-200) are referentially consistent with the parent layer map object definitions (72, 82) modified as indicated by the at least another one of the several streams (50, 60; 259; 259, 259') that is associated with the one or several parent layers (71; 192-195, 197, 198).

9. The method of any one of the preceding claims, wherein the integrity verification (33) comprises
a logical integrity verification (35) of at least one child layer map object definition modified as indicated by the stream of the several streams (50, 60; 259; 259, 259') that is associated with the child layer (81; 193-200) and/or at least one parent layer map object definition modified as indicated by the at least another one of the several streams (50, 60; 259; 259, 259') that is associated with the one or several parent layers (71; 192-195, 197, 198), and/or
a syntactical integrity verification (35) of the child layer map object definitions (72, 82) and the parent layer map object definitions (72, 82), respectively modified as indicated by the several streams (50, 60; 259; 259, 259'), to verify conformity with a set of syntactical rules.

10. The method of any one of the preceding claims, wherein the several map layers (71, 72; 192-200) define an acyclic graph (190) and comprise a base map layer defining nodes and links of a navigable network, wherein the one or several parent layers (71; 192-195, 197, 198) comprise one or both of:
the base map layer (192);
a map layer (193-195, 197, 198) that references nodes and links defined by the base map layer (192) but is different from the base map layer (192).

11. The method of claim 10, wherein the acyclic graph defines a hierarchical map layer structure (190) that comprises the base map layer at a root, wherein the acyclic graph comprises one or several map layers (71, 72; 193-200) referencing the base map layer (192) and comprising one, several, or all of: a turn restrictions layer; a speed limits layer; a speed profile layer; a one way layer; a blocked passages layer; a buildings layer; an address points layer; a points of interest layer; a parking information layer; a point of interest layer.

12. The method of any one of the preceding claims, wherein the processing system (20) receives the several streams (50, 60; 259; 259, 259') from several map layer provision systems (70, 80; 150, 15', 150"), each of the several map layer provision systems (70, 80; 150, 15', 150") being associated with a different one of the several map layers (71, 72; 192-200), wherein the several map layer provision systems (70, 80; 150, 15', 150") are operative to implement modifications of map object definitions (72, 82) in different map layers (71, 72; 192-200) independently of each other.

13. The method of any one of the preceding claims, wherein generating the output (49; 101, 102; 104; 106; 110) comprises generating first output (269) for a first map product and second output (269') for a second map product, optionally wherein the integrity verification (33) is performed separately for the first map product and the second map product.

14. The method of any one of the preceding claims, further comprising performing an action based at least on the output (49; 101, 102; 104; 106; 110), optionally wherein the action comprises one, several, or all of:
route search;
route guidance;
an automated driving function;
traffic flow control.

15. Machine-readable instruction code comprising instructions which, when executed by at least one processing circuit (30), cause the at least one processing circuit (30) to perform the method of any one of the preceding claims.

## Patentansprüche

1. Verfahren zur Modifizierung von Kartendaten, wobei das Verfahren aufweist:
Empfangen mehrere Datenströme (50, 60; 259; 259, 259') durch ein Verarbeitungssystem (20), wobei:
jeder der mehreren Datenströme (50, 60; 259; 259, 259') Daten aufweist, die Modifizierungen einer von mehreren Kartenschichten (71, 72; 192-200) anzeigen, der der Datenstrom zugeordnet ist; und
die mehreren Kartenschichten (71, 72; 192-200) eine untergeordnete Schicht (81; 193-200) und eine oder mehrere übergeordnete Schichten (71; 192-195, 197, 198) aufweisen, wobei die mehreren Kartenschichten (71, 72; 192-200) Kartenobjektdefinitionen (72, 82) aufweisen, wobei die Kartenobjektdefinitionen (72, 82) Kartenobjektdefinitionen der übergeordneten Schicht (72) in der einen oder mehreren übergeordneten Schichten (71; 192-195, 197, 198) und Kartenobjektdefinitionen der untergeordneten Schicht (82) in der untergeordneten Schicht (81; 193-200) aufweisen, wobei die Kartenobjektdefinitionen der untergeordneten Schicht (82) Referenzen (84, 86) auf Kartenobjekte der übergeordneten Schicht, die durch die Kartenobjektdefinitionen der übergeordneten Schicht (72) definiert sind, aufweisen; und
Durchführen einer Datenstromverarbeitung (32) der mehreren Datenströme (50, 60; 259; 259, 259') durch das Verarbeitungssystem (20), aufweisend:
eine Integritätsprüfung (33) zum Prüfen einer Integrität der Kartenobjektdefinitionen der untergeordneten Schicht (82) bei Modifizierung gemäß einem der untergeordneten Schicht (81; 193-200) zugeordneten Datenstrom der mehreren Datenströme (50, 60; 259; 259, 259') und der übergeordneten Kartenobjektdefinitionen der übergeordneten Schicht (72) bei Modifizierung gemäß mindestens einem weiteren der mehrere Datenströme (50, 60; 259; 259, 259'), der der einen oder den mehreren übergeordneten Schichten (71; 192-195, 197, 198) zugeordnet ist; und
Erzeugen einer Ausgabe (49; 101, 102; 104; 106; 110) in Abhängigkeit von zumindest einem Ergebnis der Integritätsprüfung (33).

2. Verfahren nach Anspruch 1, wobei der Datenstrom der mehreren Datenströme (50, 60; 259; 259, 259'), der der untergeordneten Schicht (81; 193-200) zugeordnet ist, eine erste Nachrichtenfolge (61-65) aufweist, wobei der mindestens eine weitere der mehreren Datenströme (50, 60; 259; 259, 259'), der der einen oder den mehreren übergeordneten Schichten (71; 192-195, 197, 198) zugeordnet ist, eine zweite Nachrichtenfolge (51-54) aufweist, wobei eine Nachrichtenzeitsteuerung der ersten Nachrichtenfolge (61-65) von einer Nachrichtenzeitsteuerung der zweiten Nachrichtenfolge (51-54) unabhängig ist.

3. Verfahren nach einem der vorhergehenden Ansprüche, wobei die Datenstromverarbeitung (32) ferner aufweist:
Auslösen einer Korrekturmaßnahme als Reaktion auf eine Detektion einer Inkonsistenz bei der Integritätsprüfung (33).

4. Verfahren nach Anspruch 3, wobei die Datenstromverarbeitung (32) ferner aufweist:
Speichern, als Reaktion auf die Detektion der Inkonsistenz, eines Datenelements (121; 124), das Informationen über mindestens eine Kartenobjektdefinition der untergeordneten Schicht bereitstellt, die nicht konsistent mit den Kartenobjektdefinition der übergeordneten Schicht (72, 82) ist, wobei das Datenelement (121; 124) nach der Detektion der Inkonsistenz zumindest vorübergehend gespeichert wird.

5. Verfahren nach Anspruch 4, wobei die Datenstromverarbeitung (32) ferner aufweist:
Überwachen, als Reaktion auf die Detektion der Inkonsistenz, der mehreren Datenströme (50, 60; 259; 259, 259') vor dem Auslösen der Korrekturmaßnahme, wobei das Überwachen der mehreren Datenströme (50, 60; 259; 259, 259') aufweist: Prüfen, in Abhängigkeit von dem Datenelement (121; 124), ob in einem Überwachungszeitintervall (99) nach der Detektion der Inkonsistenz die Inkonsistenz durch die Änderungen, die durch die mehrere Datenströme (50, 60; 259; 259, 259') angezeigt werden, unadressiert bleibt.

6. Verfahren nach einem der Ansprüche 3 bis 5, wobei die Korrekturmaßnahme eine, mehrere oder alle der folgenden Maßnahmen aufweist:
Korrektur einer fehlerhaften Referenz auf mindestens eines der Kartenobjekte der übergeordneten Schicht in mindestens einer der Kartenobjektdefinitionen der untergeordneten Schicht (72, 82) in Abhängigkeit von zumindest der Inkonsistenz;
Weitergabe von Rückmeldungen an Kartenschicht-Bereitstellungssysteme der mehreren Kartenschichten (71, 72; 192-200) in Abhängigkeit von zumindest der Inkonsistenz;
Ändern eines Typs von mindestens einer der Modifizierungen von einem ersten Modifizierungstyp zu einem zweiten Modifizierungstyp, wobei die mindestens eine der Modifizierungen eine Ursache für die Inkonsistenz ist und wobei das Ändern des Typs die Inkonsistenz behebt;
Verwerfen eines Duplikats einer Kartenobjekterzeugung, Verwerfen eines Duplikats einer Kartenobjektlöschung und/oder Verwerfen einer Änderung eines nicht existierenden Kartenobjekts.

7. Verfahren nach einem der vorhergehenden Ansprüche, wobei das Erzeugen der Ausgabe (49; 101, 102; 104; 106; 110) ein Aggregieren von mindestens zwei Modifizierungen von Kartenobjektdefinitionen (72, 82), die sich auf dasselbe Kartenobjekt beziehen, zu einer aggregierten Änderung aufweist, wobei die Ausgabe (49; 101, 102; 104; 106; 110) zumindest von der aggregierten Änderung abhängig ist, wobei das Aggregieren zumindest von einem Ergebnis der Integritätsprüfung (33) abhängig ist.

8. Verfahren nach einem der vorhergehenden Ansprüche, wobei die Integritätsprüfung (33) eine referentielle Integritätsprüfung (33) aufweist, die prüft, ob Änderungen der Kartenobjektdefinitionen der untergeordneten Schicht (72, 82), die durch den Datenstrom der mehrere Datenströme (50, 60; 259; 259, 259') angezeigt werden, der der untergeordneten Schicht (81; 193-200) zugeordnet ist, referentiell konsistent sind mit den Kartenobjektdefinitionen der übergeordneten Schicht (72, 82), die gemäß dem mindestens einen weiteren der mehrere Datenströme (50, 60; 259; 259, 259') geändert werden, der der einen oder den mehreren übergeordneten Schichten (71; 192-195, 197, 198) zugeordnet ist.

9. Verfahren nach einem der vorhergehenden Ansprüche, wobei die Integritätsprüfung (33) aufweist
eine logische Integritätsprüfung (35) mindestens einer Definition von Kartenobjekten der untergeordneten Schicht, die gemäß dem Datenstrom der mehreren Datenströme (50, 60; 259; 259, 259') geändert wurde, der der untergeordneten Schicht (81; 193-200) zugeordnet ist, und/oder mindestens einer Definition von Kartenobjekten der übergeordneten Schicht, die gemäß dem mindestens einen weiteren der mehrere Datenströme (50, 60; 259; 259, 259') geändert wurde, der der einen oder den mehreren übergeordneten Schichten (71; 192-195, 197, 198) zugeordnet ist, und/oder
eine syntaktische Integritätsprüfung (35) der Kartenobjektdefinitionen der untergeordneten Schicht (72, 82) und der Kartenobjektdefinitionen der übergeordneten Schicht (72, 82), die jeweils gemäß den mehreren Datenströmen (50, 60; 259; 259, 259') modifiziert wurden, um eine Konformität mit einer Gruppe syntaktischer Regeln zu prüfen.

10. Verfahren nach einem der vorhergehenden Ansprüche, wobei die mehreren Kartenschichten (71, 72; 192-200) einen azyklischen Graphen (190) definieren und eine Basiskartenschicht aufweisen, die Knoten und Kanten eines navigierbaren Netzwerks definiert, wobei die eine oder die mehreren übergeordneten Schichten (71; 192-195, 197, 198) eines oder beide der folgenden Elemente aufweisen:
die Basiskartenschicht (192);
eine Kartenschicht (193-195, 197, 198), die Knoten und Kanten referenziert, die durch die Basiskartenschicht (192) definiert werden, die aber von der Basiskartenschicht (192) verschieden ist.

11. Verfahren nach Anspruch 10, wobei der azyklische Graph eine hierarchische Kartenschichtstruktur (190) definiert, die die Basiskartenschicht an einer Wurzel aufweist, wobei der azyklische Graph eine oder mehrere Kartenschichten (71, 72; 193-200) aufweist, die die Basiskartenschicht (192) referenzieren und eine, mehrere oder alle der folgenden Schichten aufweisen: eine Abbiegebeschränkungsschicht; eine Geschwindigkeitsbegrenzungsschicht; eine Geschwindigkeitsprofilschicht; eine Einbahnstraßenschicht; eine Schicht gesperrter Durchfahrten; eine Gebäudeschicht; eine Adresspunktschicht; eine Points-of-Interest-Schicht (POl-Schicht); eine Parkinformationsschicht; eine Point-of-Interest-Schicht (POl-Schicht).

12. Verfahren nach einem der vorhergehenden Ansprüche, wobei das Verarbeitungssystem (20) die mehrere Datenströme (50, 60; 259; 259, 259') von mehreren Kartenschicht-Bereitstellungssystemen (70, 80; 150, 15', 150") empfängt, wobei jedes der mehreren Kartenschicht-Bereitstellungssysteme (70, 80; 150, 15', 150") einer anderen der mehreren Kartenschichten (71, 72; 192-200) zugeordnet ist, wobei die mehreren Kartenschicht-Bereitstellungssysteme (70, 80; 150, 15', 150") eingerichtet sind, Änderungen von Kartenobjektdefinitionen (72, 82) in verschiedenen Kartenschichten (71, 72; 192-200) unabhängig voneinander zu implementieren.

13. Verfahren nach einem der vorhergehenden Ansprüche, wobei das Erzeugen der Ausgabe (49; 101, 102; 104; 106; 110) ein Erzeugen einer ersten Ausgabe (269) für ein erstes Kartenprodukt und einer zweiten Ausgabe (269') für ein zweites Kartenprodukt aufweist, wobei optional die Integritätsprüfung (33) für das erste Kartenprodukt und das zweite Kartenprodukt separat durchgeführt wird.

14. Verfahren nach einem der vorhergehenden Ansprüche, ferner aufweisend ein Ausführen einer Aktion in Abhängigkeit von zumindest der Ausgabe (49; 101, 102; 104; 106; 110), wobei die Aktion optional eine, mehrere oder alle der folgenden aufweist:
Routensuche;
Routenführung;
eine automatisierte Fahrfunktion;
Verkehrsflusssteuerung.

15. Maschinenlesbarer Befehlscode, der Befehle aufweist, die bei Ausführung durch mindestens eine Verarbeitungsschaltung (30) die mindestens eine Verarbeitungsschaltung (30) zur Ausführung des Verfahren nach einem der vorhergehenden Ansprüche veranlassen.

## Revendications

1. Procédé de modification de données de carte, le procédé comprenant :
l'obtention, par un système de traitement (20), de plusieurs flux (50, 60 ; 259 ; 259, 259'), dans lequel :
chacun des plusieurs flux (50, 60 ; 259 ; 259, 259') comprend des données indicatives de modifications de l'une de plusieurs couches de carte (71, 72 ; 192 à 200) à laquelle le flux est associé ; et
les plusieurs couches de carte (71, 72 ; 192 à 200) comprennent une couche enfant (81 ; 193 à 200) et une ou plusieurs couches parentes (71 ; 192 à 195, 197, 198), dans lequel les plusieurs couches de carte (71, 72 ; 192 à 200) comprennent des définitions d'objet de carte (72, 82), dans lequel les définitions d'objet de carte (72, 82) comprennent des définitions d'objet de carte de couche parent (72) dans les une ou plusieurs couches parentes (71; 192 à 195, 197, 198) et des définitions d'objet de carte de couche enfant (82) dans la couche enfant (81 ; 193 à 200), dans lequel les définitions d'objet de carte de couche enfant (82) comportent des références (84, 86) à des objets de carte de couche parent définis par les définitions d'objet de carte de couche parent (72), et
la réalisation, par le système de traitement (20), d'un traitement de flux (32) des plusieurs flux (50, 60 ; 259 ; 259, 259'), comprenant :
une vérification d'intégrité (33) pour vérifier l'intégrité des définitions d'objet de carte de couche enfant (82) modifiées comme indiqué par un flux des plusieurs flux (50, 60 ; 259 ; 259, 259') qui est associé à la couche enfant (81 ; 193 à 200) et des définitions d'objet de carte de couche parent (72) modifiées comme indiqué par au moins un autre des plusieurs flux (50, 60 ; 259 ; 259, 259') qui est associé aux une ou plusieurs couches parentes (71 ; 192 à 195, 197, 198) ; et
la génération d'une sortie (49 ; 101, 102 ; 104 ; 106; 110) sur la base d'au moins un résultat de la vérification d'intégrité (33).

2. Procédé selon la revendication 1, dans lequel le flux des plusieurs flux (50, 60 ; 259 ; 259, 259') qui est associé à la couche enfant (81 ; 193 à 200) comprend une première séquence de messages (61 à 65), dans lequel l'au moins un autre des plusieurs flux (50, 60 ; 259; 259, 259') qui est associé aux une ou plusieurs couches parentes (71 ; 192 à 195, 197, 198) comprend une deuxième séquence de messages (51 à 54), dans lequel une temporisation de message de la première séquence de messages (61 à 65) est indépendant d'une temporisation des message de la deuxième séquence de messages (51 à 54).

3. Procédé selon l'une quelconque des revendications précédentes, dans lequel le traitement de flux (32) comprend en outre :
le déclenchement d'une action correctrice en réponse à la détection d'une incohérence dans la vérification d'intégrité (33).

4. Procédé selon la revendication 3, dans lequel le traitement de flux (32) comprend en outre :
le stockage, en réponse à la détection de l'incohérence, d'un élément de données (121 ; 124) qui fournit des informations sur au moins une définition d'objet de carte de couche enfant qui n'est pas cohérente avec les définitions d'objet de carte de couche parent (72, 82), l'élément de données (121 ; 124) étant stocké au moins temporairement après la détection de l'incohérence.

5. Procédé selon la revendication 4, dans lequel le traitement de flux (32) comprend en outre :
la surveillance, en réponse à la détection de l'incohérence, des plusieurs flux (50, 60 ; 259 ; 259, 259') avant le déclenchement de l'action correctrice, dans lequel la surveillance des plusieurs flux (50, 60 ; 259 ; 259, 259') comprend la confirmation, sur la base de l'élément de données (121 ; 124), du fait que l'incohérence détectée demeure non traitée par les modifications indiquées par les plusieurs flux (50, 60 ; 259 ; 259, 259') dans un intervalle de temps de surveillance (99) après la détection de l'incohérence.

6. Procédé selon l'une quelconque des revendications 3 à 5, dans lequel l'action correctrice comprend une, plusieurs, ou l'ensemble des actions suivantes :
la correction d'une référence incorrecte à au moins l'un des objets de carte de couche parent dans au moins l'une des définitions d'objet de carte de couche enfant (72, 82) sur la base au moins de l'incohérence ;
la propagation d'une retour d'informationn à des systèmes de fourniture de couche de carte des plusieurs couches de carte (71, 72 ; 192 à 200) sur la base au moins de l'incohérence ;
le changement d'un type d'au moins l'une des modifications d'un premier type de modification à un deuxième type de modification, dans lequel l'au moins une des modifications est une cause fondamentale de l'incohérence, et dans lequel le changement du type résout l'incohérence ;
le rejet d'un duplicata d'une création d'objet de carte, d'un duplicata d'une suppression d'objet de carte, et/ou d'une modification d'un objet de carte inexistant.

7. Procédé selon l'une quelconque des revendications précédentes, dans lequel la génération de la sortie (49 ; 101, 102 ; 104 ; 106 ; 110) comprend l'agrégation d'au moins deux modifications de définitions d'objet de carte (72, 82) relatives à un même objet de carte en une modification agrégée, dans lequel la sortie (49 ; 101, 102 ; 104 ; 106 ; 110) est basée au moins sur la modification agrégée, dans lequel l'agrégation est réalisée sur la base au moins d'un résultat de la vérification d'intégrité (33).

8. Procédé selon l'une quelconque des revendications précédentes, dans lequel la vérification d'intégrité (33) comprend une vérification d'intégrité (33) référentielle qui contrôle que des modifications des définitions d'objet de carte de couche enfant (72, 82) telles qu'indiquées par le flux des plusieurs flux (50, 60 ; 259 ; 259, 259') qui est associé à la couche enfant (81 ; 193 à 200) sont référentiellement cohérentes avec les définitions d'objet de carte de couche parent (72, 82) modifiées comme indiqué par l'au moins un autre des plusieurs flux (50, 60 ; 259 ; 259, 259') qui est associé aux une ou plusieurs couches parentes (71 ; 192 à 195, 197, 198).

9. Procédé selon l'une quelconque des revendications précédentes, dans lequel la vérification d'intégrité (33) comprend
une vérification d'intégrité (35) logique d'au moins une définition d'objet de carte de couche enfant modifiée comme indiqué par le flux des plusieurs flux (50, 60 ; 259 ; 259, 259') qui est associé à la couche enfant (81 ; 193 à 200) et/ou d'au moins une définition d'objet de carte de couche parent modifiée comme indiqué par l'au moins un autre des plusieurs flux (50, 60 ; 259 ; 259, 259') qui est associé aux une ou plusieurs couches parentes (71 ; 192 à 195, 197, 198), et/ou
une vérification d'intégrité (35) syntaxique des définitions d'objet de carte de couche enfant (72, 82) et des définitions d'objet de carte de couche parent (72, 82), respectivement modifiées comme indiqué par les plusieurs flux (50, 60 ; 259 ; 259, 259'), pour vérifier la conformité avec un ensemble de règles syntaxiques.

10. Procédé selon l'une quelconque des revendications précédentes, dans lequel les plusieurs couches de carte (71, 72 ; 192 à 200) définissent un graphe acyclique (190) et comprennent une couche de carte de base définissant des nœuds et des liaisons d'un réseau navigable, dans lequel les une ou plusieurs couches parentes (71 ; 192 à 195, 197, 198) comprennent l'une ou les deux parmi :
la couche de carte de base (192) ;
une couche de carte (193 à 195, 197, 198) qui référence des nœuds et des liaisons définis par la couche de carte de base (192), mais est différente de la couche de carte de base (192).

11. Procédé selon la revendication 10, dans lequel le graphe acyclique définit une structure de couches de carte hiérarchique (190) qui comprend une couche de carte de base au niveau d'une racine, dans lequel le graphe acyclique comprend une ou plusieurs couches de carte (71, 72 ; 193 à 200) référençant la couche de carte de base (192) et comprenant une, plusieurs ou l'ensemble des couches suivantes : une couche de restrictions de virage ; une couche de limites de vitesse ; une couche de profil de vitesse ; une couche de sens unique ; une couche de passages bloqués ; une couche de bâtiments ; une couche de points d'adresse ; une couche de points d'intérêt ; une couche d'informations de stationnement ; une couche de point d'intérêt.

12. Procédé selon l'une quelconque des revendications précédentes, dans lequel le système de traitement (20) reçoit les plusieurs flux (50, 60 ; 259 ; 259, 259') à partir de plusieurs systèmes de fourniture de couche de carte (70, 80 ; 150, 15', 150"), chacun des plusieurs systèmes de fourniture de couche de carte (70, 80 ; 150, 15', 150") étant associé à l'une différente des plusieurs couches de carte (71, 72 ; 192 à 200), dans lequel les plusieurs systèmes de fourniture de couche de carte (70, 80 ; 150, 15', 150") sont fonctionnels pour mettre en œuvre des modifications de définitions d'objet de carte (72, 82) dans différentes couches de carte (71, 72; 192 à 200) indépendamment les uns des autres.

13. Procédé selon l'une quelconque des revendications précédentes, dans lequel la génération de la sortie (49 ; 101, 102 ; 104 ; 106 ; 110) comprend la génération d'une première sortie (269) pour un premier produit de carte et d'une deuxième sortie (269') pour un deuxième produit de carte, éventuellement dans lequel la vérification d'intégrité (33) est réalisée séparément pour le premier produit de carte et le deuxième produit de carte.

14. Procédé selon l'une quelconque des revendications précédentes, comprenant en outre la réalisation d'une action sur la base au moins de la sortie (49 ; 101, 102 ; 104 ; 106 ; 110), éventuellement dans lequel l'action comprend une, plusieurs, ou l'ensemble des actions suivantes :
une recherche d'itinéraire ;
un guidage sur itinéraire ;
une fonction de conduite automatisée ;
une régulation de flux de circulation.

15. Code d'instructions lisible par machine comprenant des instructions qui, lorsqu'elles sont exécutées par au moins un circuit de traitement (30), amènent l'au moins un circuit de traitement (30) à réaliser le procédé de l'une quelconque des revendications précédentes.
